# EUROPEAN PATENT APPLICATION

(11) **EP 2 093 679 A1**
(43) Date of publication of application: **26.08.2009**
(21) Application number: 09002450.6
(22) Date of filing: 20.02.2009
(51) Int. Cl.: G06F 17/30

(54) **System for providing an interface for collaborative innovation**

(30) Priority: 22.02.2008 US 36012; 22.02.2008 US 35988; 22.02.2008 US 36001
(71) Applicant: Accenture Global Services GmbH, 8200 Schaffhausen (CH)
(72) Inventor: Bechtel, Michael E., Naperville Illinois 60565 (US); Kampas, Sean R., Hanover Park Illinois 60133 (US)
(74) Representative: Müller-Boré & Partner Patentanwälte

(57) **Abstract**

A system is described for providing an interface for collaborative innovation. The system may include a memory, an interface, and a processor. The memory may store an item, primary responses, secondary responses and ratings. The interface may communicate with users and a content provider and may allow the users to create primary responses associated with the item, create secondary responses associated with the primary responses and rate the primary and secondary responses. The processor may receive the item from the content provider and provide the interface to the users. The processor may receive the primary and secondary responses from the users, and may display a graphical hierarchical representation of the item and the responses. The processor may allow the users to rate the primary and secondary responses through the graphical hierarchical representation. The processor may provide the primary and secondary responses to the content provider, ordered based on the ratings.

## Description

### TECHNICAL FIELD

The present description relates generally to a system, method and computer program product, generally referred to as a system, for providing an interface for collaborative innovation, and more particularly, but not exclusively, to providing an interface for enabling collaborative innovation processes within an organization.

### BACKGROUND

Collaborative software may allow users to cooperatively build off an initial idea or topic. The topic may continually evolve as additional users provide insight to the topic; however, the collaborative software may only be capable of displaying linear revisions of the topic. For example, a collaborative software system may provide users with an interface for creating and expanding articles on topics. The interface may provide users with the most recent version of the article, and may allow the users to post modifications to the most recent version of the article. However, in some instances there may be topics where there is not one clear answer to a given question. There may be competing, and equally valid, opinions to what the content of such an article should contain.

### SUMMARY

A system for providing an interface for collaborative innovation may include a memory, an interface, and a processor. The memory may be connected to the processor and the interface and may store an item, primary responses, secondary responses and ratings. The interface may communicate with users and a content provider. The interface may allow the users to create primary responses associated with the item, create secondary response associated with the primary responses and rate the primary and secondary responses. The processor may receive the item from the content provider and provide the interface to the one or more users via the interface. The processor may receive the primary and secondary responses from the users via the interface, and may display a graphical hierarchical representation of the item, the primary responses and the secondary responses. The processor may allow the users to rate the primary and secondary response through the graphical hierarchical representation. The processor may order the primary and secondary responses based on the ratings and may provide the ordered primary and secondary responses to the content provider. Corresponding computer-implemented methods and computer program products, particularly tangibly embodied on a computer-readable medium, as a signal and/or data stream, are provided.

Other systems, methods, features and advantages will be, or will become, apparent to one with skill in the art upon examination of the following figures and detailed description. It is intended that all such additional systems, methods, features and advantages be included within this description, be within the scope of the embodiments, and be protected by the following claims and be defined by the following claims. Further aspects and advantages are discussed below in conjunction with the description.

### BRIEF DESCRIPTION OF THE DRAWINGS

The system and/or method may be better understood with reference to the following drawings and description. Non-limiting and non-exhaustive descriptions are described with reference to the following drawings. The components in the figures are not necessarily to scale, emphasis instead being placed upon illustrating principles. In the figures, like referenced numerals may refer to like parts throughout the different figures unless otherwise specified.

Fig. 1 is a block diagram of a general overview of a system for providing an interface for collaborative innovation.

Fig. 2 is a block diagram of a network environment implementing the system of Fig. 1 or other systems for providing an interface for collaborative innovation.

Fig. 3 is a screenshot of a user login interface in the system of Fig. 1, or other systems for providing an interface for collaborative innovation.

Fig. 3A is a screenshot of an alternative user login interface in the system of Fig. 1, or other systems for providing an interface for collaborative innovation.

Fig. 4 is a screenshot of an initial item selection interface in the system of Fig. 1, or other systems for providing an interface for collaborative innovation.

Fig. 4A is a screenshot of an alternative initial item selection interface in the system of Fig. 1, or other systems for providing an interface for collaborative innovation.

Fig. 5 is a screenshot of an initial item details screen in the system of Fig. 1, or other systems for providing an interface for collaborative innovation.

Fig. 6 is a screenshot of an initial item collaborative innovation screen in the system of Fig. 1, or other systems for providing an interface for collaborative innovation.

Fig. 6A is a screenshot of an alternative initial item collaborative innovation screen in the system of Fig. 1, or other systems for providing an interface for collaborative innovation.

Fig. 6B is a screenshot of a list view in an alternative initial item collaborative innovation screen in the system of Fig. 1, or other systems for providing an interface for collaborative innovation.

Fig. 7 is a screenshot of an initial item results screen in the system of Fig. 1, or other systems for providing an interface for collaborative innovation.

Fig. 7A is a screenshot of an alternative initial item results screen in the system of Fig. 1, or other systems for providing an interface for collaborative innovation.

Fig. 8 is a screenshot of a user dashboard screen displaying the my vine tab in the system of Fig. 1, or other systems for providing an interface for collaborative innovation.

Fig. 8A is a screenshot of an alternative user dashboard screen displaying the my vine tab in the system of Fig. 1, or other systems for providing an interface for collaborative innovation.

Fig. 9 is a screenshot of an administrator interface in the system of Fig. 1, or other systems for providing an interface for collaborative innovation.

Fig. 9A is a screenshot of an alternative administrator interface in the system of Fig. 1, or other systems for providing an interface for collaborative innovation.

Fig. 10 is a screenshot of a recent activity screen in the system of Fig. 1, or other systems for providing an interface for collaborative innovation.

Fig. 11 is a flowchart illustrating the operations of rating an idea in the system of Fig. 1, or other systems for providing an interface for collaborative innovation.

Fig. 12 is a flowchart illustrating the operations of creating an idea in the system of Fig. 1, or other systems for providing an interface for collaborative innovation.

Fig. 13 is a flowchart illustrating the operations of viewing an initial item summary in the system of Fig. 1, or other systems for providing an interface for collaborative innovation.

Fig. 14 is a flowchart illustrating the operations of displaying user dashboard information in the system of Fig. 1, or other systems for providing an interface for collaborative innovation.

Fig. 15 is an illustration of multiple innovation paths in the system of Fig. 1, or other systems for providing an interface for collaborative innovation.

Fig. 16 is a flowchart illustrating the operations of collaborative innovation in the system of Fig. 1, or other systems for providing an interface for collaborative innovation.

Fig. 17 is a flowchart illustrating the operations of multiple innovation iterations in the system of Fig. 1, or other systems for providing an interface for collaborative innovation.

Fig. 18 is a flowchart illustrating the operations performed by a content provider of collaborative innovation in the system of Fig. 1, or other systems for providing an interface for collaborative innovation.

Fig. 19 is a block diagram of collaborative review components in the system of Fig. 1, or other systems for providing an interface for collaborative innovation.

Fig. 20 is a flowchart illustrating the operations of collaborative review in the system of Fig. 1, or other systems for providing an interface for collaborative innovation.

Fig. 21 is a flowchart illustrating the operations of calculating a user response quality score in the system of Fig. 1, or other systems for providing an interface for collaborative innovation.

Fig. 22 is a flowchart illustrating the operations of maintaining a user response quality score in the system of Fig. 1, or other systems for providing an interface for collaborative innovation.

Fig. 23 is an illustration of a general computer system that may be used in the system of Fig. 2, or other systems for providing an interface for collaborative innovation.

### DETAILED DESCRIPTION

A system and method, generally referred to as a system, may relate to providing an interface for collaborative innovation, and more particularly, but not exclusively, to providing an interface for enabling collaborative innovation processes within an organization. The principles described herein may be embodied in many different forms.

The system may provide an interface to one or more users within an organization. The interface may allow the users to create one or more ideas associated with an initial idea. The initial idea may be a topic or issue of relevance to the organization. The interface may also allow the users to rate the one or more ideas. The system may allow any number of ideas to be associated with the initial idea and/or with the other ideas, thereby allowing for multiple concurrent revisions of each initial idea. The system may provide an interface displaying a graphical representation of the ideas and the associations between the ideas to the users. The graphical representation may allow the users to easily determine where to add an additional idea to an existing idea. The system may order the ideas based on the ratings received for the ideas, and may display the ordered ideas to the creator of the initial idea. The creator of the initial idea may use the ordered list of ideas to efficiently determine the most valuable ideas associated with the initial idea.

Alternatively or in addition, a system and method, generally referred to as a system, may relate to providing for collaborative innovation, and more particularly, but not exclusively, providing for collaborative innovation where multiple innovation paths may stem from an initial item resulting in multiple innovation results. The principles described herein may be embodied in many different forms.

The system may be used to provide users with an unstructured collaborative innovation system. The system may allow users to control the flow and direction of the collaborative innovation. The system may allow users to create multiple parallel streams of innovation branching off of one initial item. The system may allow users to simultaneously innovate the initial item from multiple different perspectives. The system may allow for simultaneous innovation of incompatible perspectives of the initial idea. The system may provide a completely unrestricted collaboration environment which may maximize the users' innovation of an initial item. The results of the collaborative innovation may be multiple distinct innovations based on the initial item.

Alternatively or in addition, a system and method, generally referred to as a system, may relate to providing for collaborative review, and more particularly, but not exclusively, providing for collaborative review where users' reviews are weighted based on the quality of the users' participation in the system. The principles described herein may be embodied in many different forms.

The system may be used in a collaborative environment to increase the accuracy of the collaborative results. For example, in a collaborative environment users may be presented with an initial item, such as a question, for review. A user may provide a response to the initial item and may rate the responses of other users. The ratings of the users may be used to determine which response is the most accurate response to the initial item. The system may increase the accuracy determining the most accurate response by weighting the ratings of each user. The weight may be indicative of the user's proficiency in the collaborative environment. The weight for each user may be based on the user's activity in the collaborative environment and the ratings the user's responses have received from the other users in the collaborative environment. Thus, when determining the most accurate response the weight applied to the ratings of an expert user may be higher than the weight applied to the ratings of a novice user. By applying more weight to the ratings of the expert users and less weight to the rating of the novice users, the system may increase the accuracy of the collaborative results.

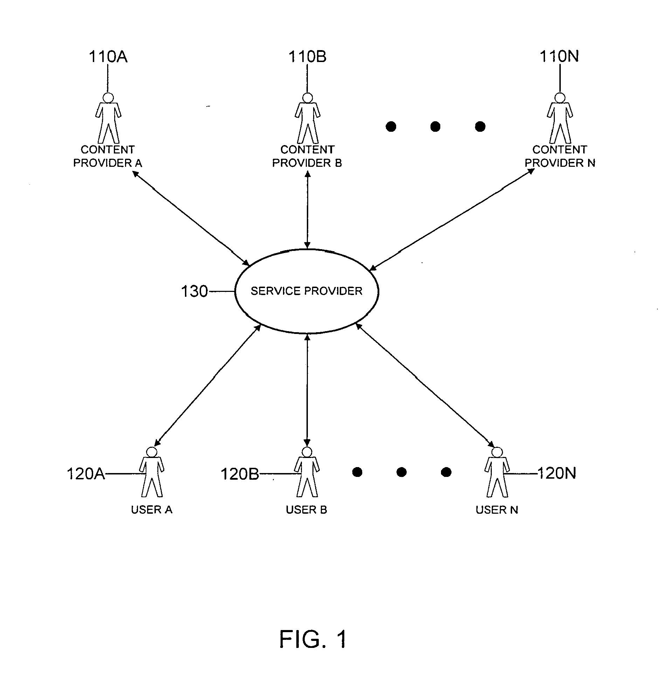

Fig. 1 provides a general overview of a system 100 for providing an interface for collaborative innovation. Not all of the depicted components may be required, however, and some implementations may include additional components. Variations in the arrangement and type of the components may be made without departing from the spirit or scope of the claims as set forth herein. Additional, different or fewer components may be provided.

The system 100 may include one or more content providers 110A-N, such as decision making personnel of an organization, or any providers of content for review, a service provider 130, such as a collaborative innovation interface provider, a collaborative innovation service provider, and/or a collaborative review service provider, and one or more users 120A-N, such as employees of the organization, other parties authorized to use the service, or any users in a collaborative environment. The service provider 130 may provide an interface for collaborative innovation.

Collaborative innovation may be the process of building and refining ideas in a collaborative environment. The users 120A-N may provide ideas, refinements of ideas, rating of ideas, or generally any data that may assist the collaborative innovation process. The content providers 110A-N may provide initial items, or seed ideas, to begin the collaborative process and may review the results of the collaborative innovation process. Alternatively or in addition one or more of the users 120A-N may be authorized to provide initial items. One or more of the users 120A-N and/or the content providers 110A-N may be system administrators, also referred to as administrators.

For example, in an organization the content providers 110A-N may be upper management, or decision makers within the organization while the users 120A-N may be employees of the organization. In another example, the content providers 110A-N may be administrators of an online collaborative web site, such as WIKIPEDIA, and the users 120A-N may be any web surfers providing knowledge to the collaborative website. The initial content, or item, may be any information capable of being responded to by the users 120A-N, such as a statement, a question, an image, a song, or a video. In the example of an organization, a content provider A 110A may provide a question as the initial item, such as a question of importance to the upper management of the organization.

The users 120A-N may provide responses to the initial item and responses to existing responses, such as comments, or generally any information that may assist the collaborative review process. A response to an existing response may be referred to as a revision. The users 120A-N may provide a revision to a response at any point in the innovation path. For example, the user A 120A may provide a response to the initial item, or the user A 120A may provide a revision to a response to the initial item. As the users 120A-N provide responses to existing responses, distinct parallel paths of innovation may emerge from the initial item. For example, there may be three responses to the initial item. The three responses may each have three responses of their own, and so on. The result of the collaborative innovation process may be conceptualized as a tree-like structure with the initial item as the root and multiple responses branching out from the initial item. The end of each of the parallel innovation paths may be distinct innovations based on the initial item. However, the end of the innovation path may not necessarily be the most valuable innovation derived from the process.

The users 120A-N may provide ratings of the responses of the other users 120A-N. The ratings may be indicative of whether the users 120A-N believe the response is accurate, or valuable, based on the initial item. For example, if the initial item is a question, the users 120A-N may rate the responses and the revisions to the responses based on which are the most accurate responses to the question. The service provider 130 may order the responses and revisions, based on the ratings, and provide an ordered list of responses to the content provider A 110A who provided the initial item. The content provider A 110A may be able to quickly review the highest rated responses and/or revisions and select the response and/or revision which is most accurate. The content provider A 110A may provide an indication of the most accurate response and/or revision to the service provider 130.

The service provider 130 may maintain a user response quality score for each of the users 120A-N in the system 100. The user response quality score may be indicative of the level of proficiency of the users 120A-N in the system 100. The user response quality score for the user A 120A may be based on the number of responses the user A 120A has contributed to the system 100, the number of times the responses of the user A 120A have been viewed by the other users 120B-N, the average rating the users 120B-N have given the responses of the user A 120A, and the number of responses of the user A 120A has been selected as the most accurate response by one of the content providers 110A-N.

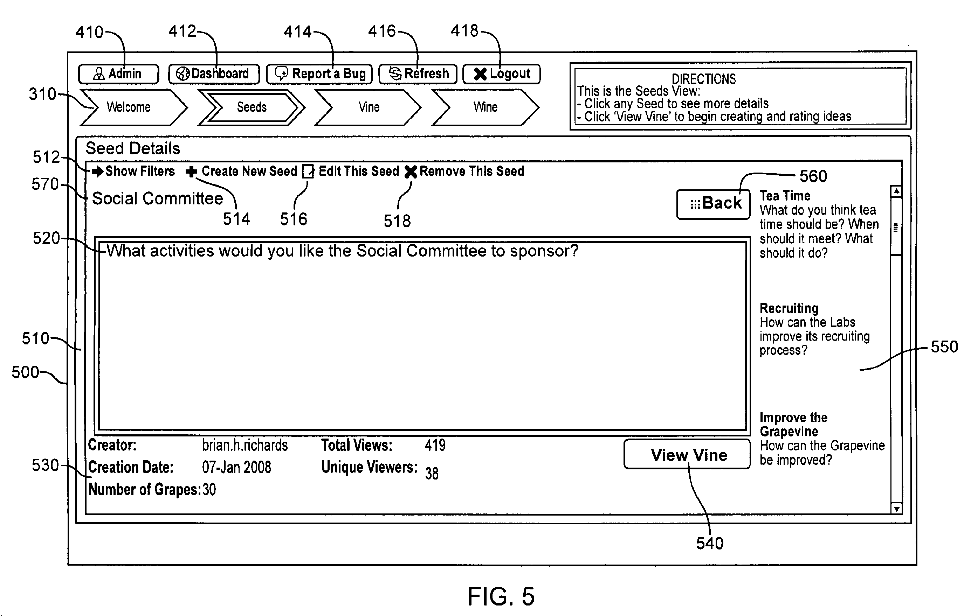

The user response quality score may be normalized across all of the users 120A-N. For example, if the user response quality score is based on the number of responses provided by the user A 120A, the service provider 130 may divide the number of responses provided by the user A 120A by the average number of responses provided by each of the users 120A-N to determine the user response quality score of the user A 120A. The service provider 130 may use the user response quality score as a weight in determining the total ratings of the responses by multiplying the user response quality score by each rating provided by the user A 120A. The calculation of the user response quality score of each of the users 120A-N may be discussed in more detail in Fig. 5.

For example, if the service provider 130 requests the users 120A-N to rate whether the "like" or "don't like" a response, a "like" rating may correlate to a value of 1 and a "don't like" rating may correlate to a value of 0. The rating given by each of the users 120A-N may be multiplied by the normalized user response quality score of each of the users 120A-N to determine the weighted rating of each user. The weighted rating of each of the users 120A-N for a given response may then be added together to generate a total rating for the response. By multiplying the ratings of the users 120A-N by a normalized weight, the ratings of the more proficient users 120A-N may be granted a greater affect than those of the less proficient users 120A-N.

The content providers 110A-N may provide incentives, such as rewards, to the users 120A-N, such as the user A 120A, if the user quality score of the user A 120A is above a certain threshold. The rewards may motivate the users 120A-N to participate in the system 100 and provide accurate responses to the system 100. Alternatively or in addition, the content providers 110A-N may eliminate a user A 120A from the system 100 if the user quality score of the user A 120A falls below a certain threshold. In the example of an organization, being eliminated from the system 100 may be detrimental to the employment of a user A 120A, so the user A 120A may also be motivated to not fall below the threshold. By properly incentivizing the users 120A-N, the content providers 110A-N may increase the accuracy of the collaborative review.

In operation the service provider 130 may provide the content providers 110A-N with an interface for identifying an initial idea. The initial idea may be question whose answer is of value to one of the content providers 110A-N, such as the content provider A 110A. For example, an initial question may be "what activities would you like the social committee to sponsor?" Alternatively or in addition the initial idea may be a statement of opinion or fact. The service provider 130 may provide the content provider A 110A with an interface for identifying which users 120A-N the initial idea should be displayed to and/or which users 120A-N should be allowed to rate the idea or enhance the idea. An enhancement of an initial idea may be referred to as a response, revision, or primary response. An enhancement of an primary response may be referred to as a secondary response, and so on. The system 100 may allow the content provider A 110A to select one or more users 120A-N, or a group of users 120A-N.

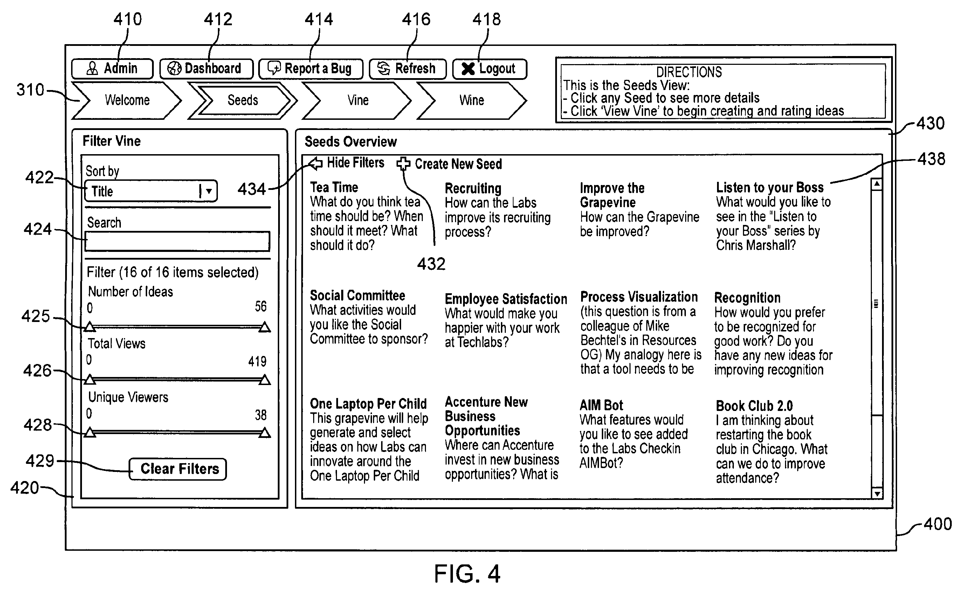

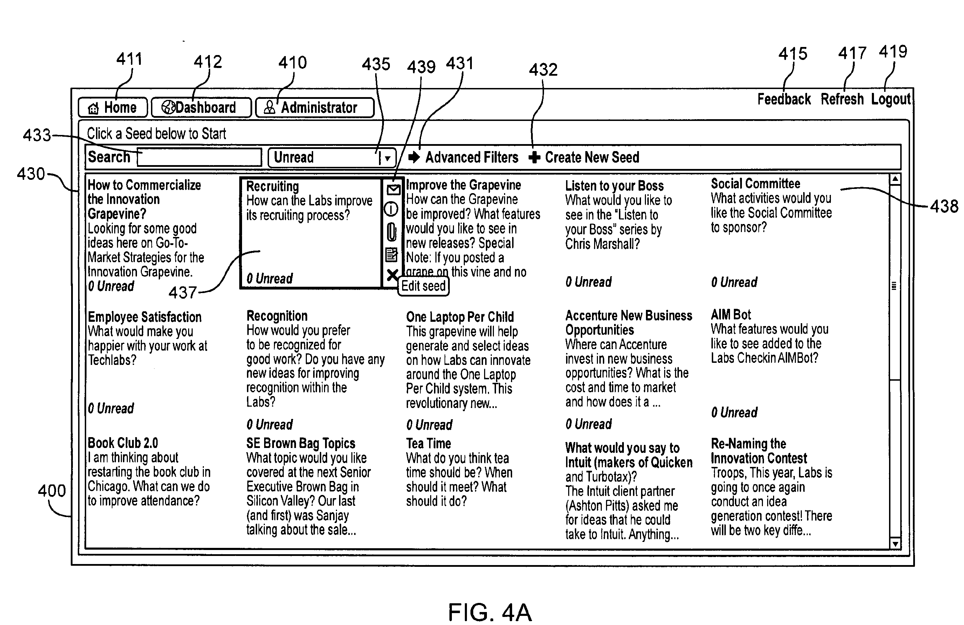

Once an initial question has been created the service provider 130 may send a notification to the one or more users 120A-N that a new question is available, such as, such as by emailing the users 120A-N. The service provider 130 may provide an interface displaying the initial ideas in the system 100 to the users 120A-N. The interface may allow the users 120A-N to filter the initial ideas based on one or more characteristics of the ideas. The users 120A-N may use the interface to select an initial idea. The interface for viewing and filtering initial ideas may be discussed in more detail in Fig. 4. If a user A 120A selects an initial idea, the service provider 130 may provide the user A 120A with an interface displaying detailed information regarding the initial idea. The interface displaying detailed initial idea information may be discussed in more detail in Fig. 5.

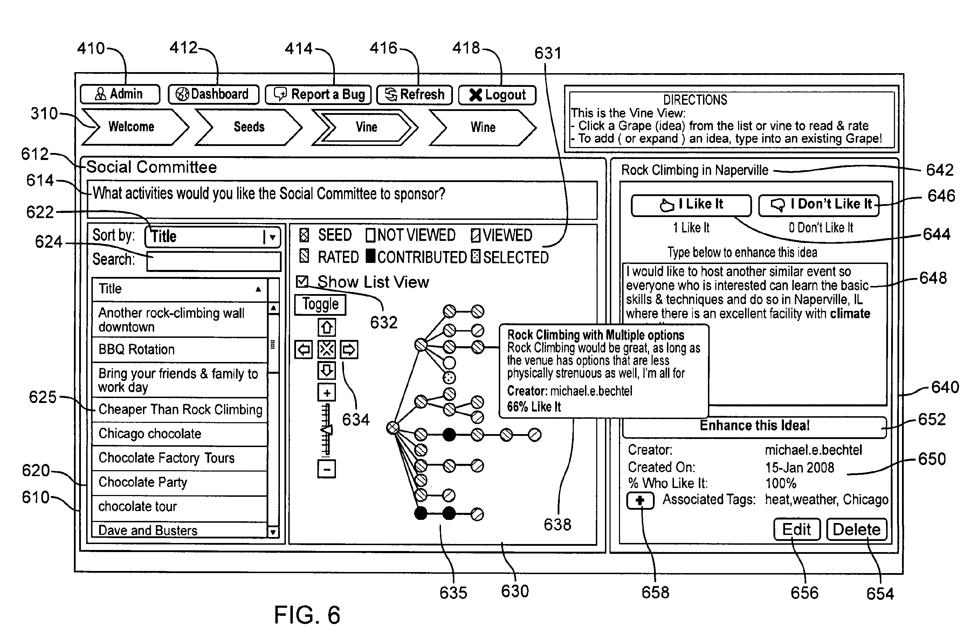

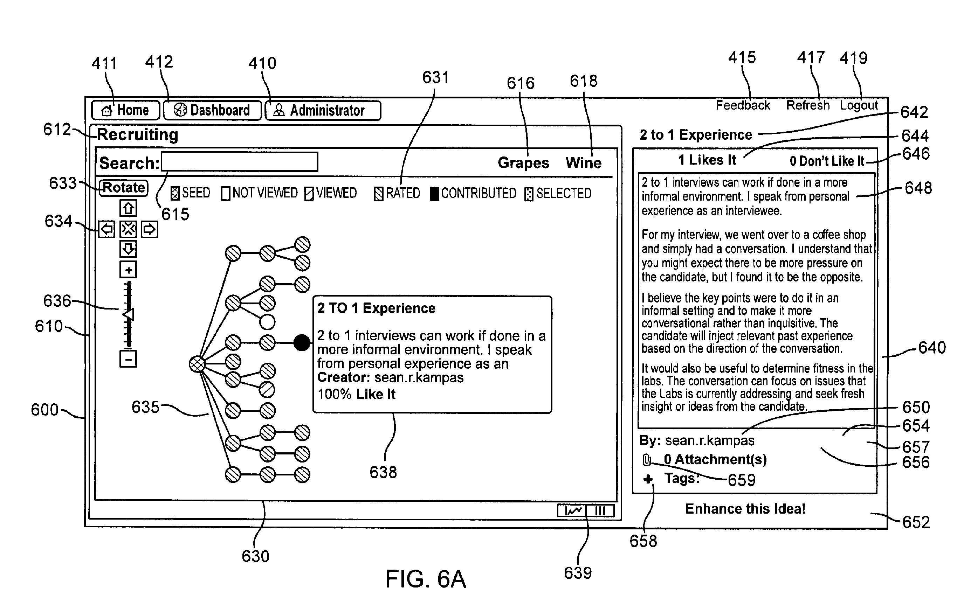

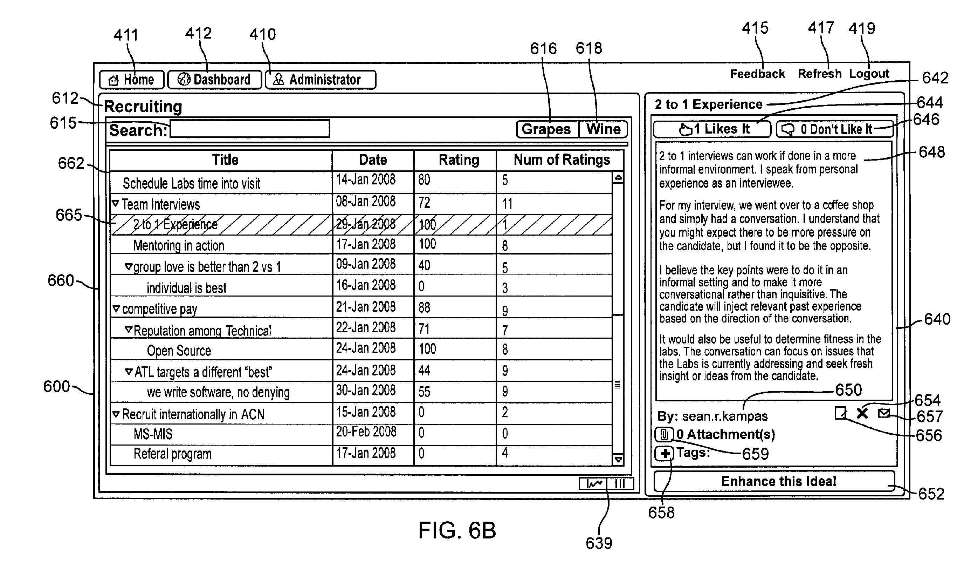

The service provider 130 may provide the users 120A-N with an interface for creating enhancements to the ideas and an interface for commenting on and rating ideas. The interface may display all of the ideas innovated from the initial item to the users 120A-N and may allow the users 120A-N to select and rate an idea. In the system 100, the display of all the ideas innovated from the initial item may be referred to as the collaborative innovation view. The initial item and the ideas innovated from the initial item may be represented in the collaborative innovation view as a graphical hierarchical structure. The graphical hierarchical structure may allow the users 120A-N to easily navigate, and rate, the ideas. The interface may further allow the users 120A-N to search and sort the ideas, based one or more idea characteristics, such as the title of the idea. In the system 100 an idea which enhances an original idea or another idea may be referred to as a grape idea, or simply a grape. The interface for enhancing and rating ideas may be discussed in more detail in Fig. 6.

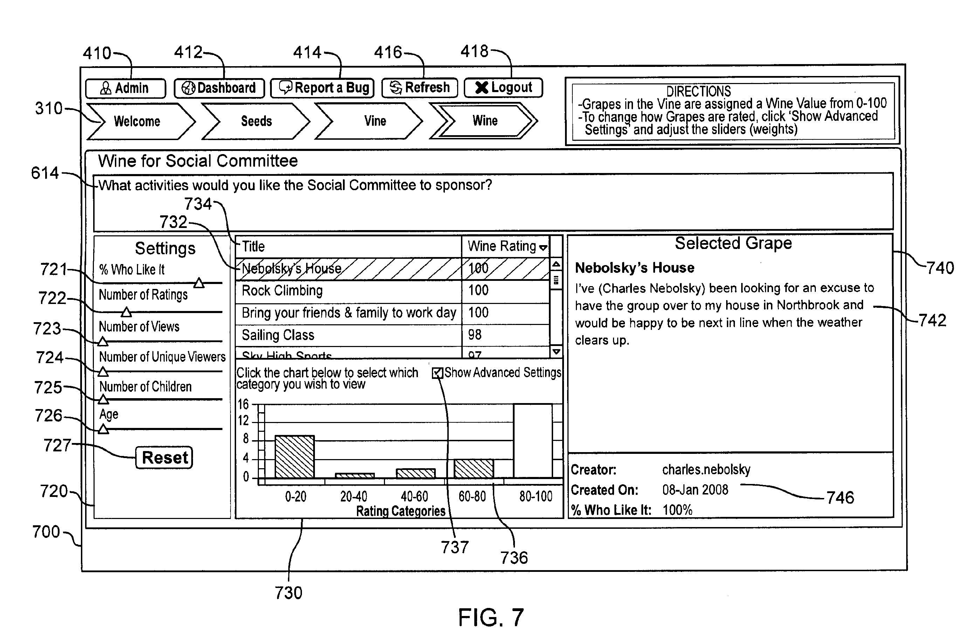

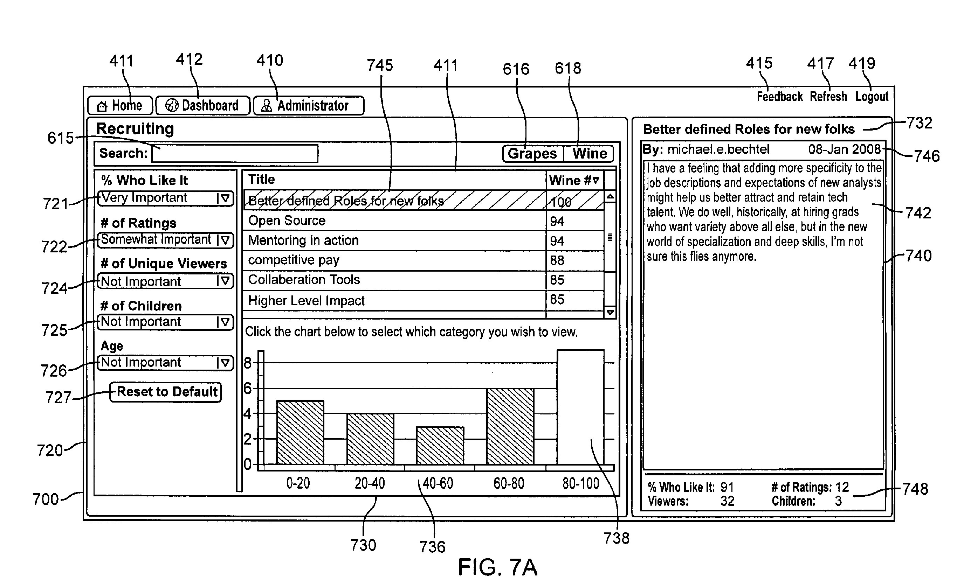

Once the period of time allocated to collaborating on the initial idea has expired, the service provider 130 may notify the content provider A 110A that the collaborative innovation process has completed. The service provider 130 may provide the content provider A 110A with an interface for viewing the results of the collaborative innovation process. The results may be displayed as an ordered list of ideas generated by the users 120A-N during the innovation process. The ideas may be ordered based on the ratings the ideas received from the users 120AN. The service provider 130 may provide the content provider A 110A with an interface for filtering the results based on one or more characteristics of the users 120A-N who rated the ideas. In the system 100 the ideas receiving the highest ratings may be referred to as wine ideas, or simply wine. The interface for viewing collaborative innovation results may be discussed in Fig. 7.

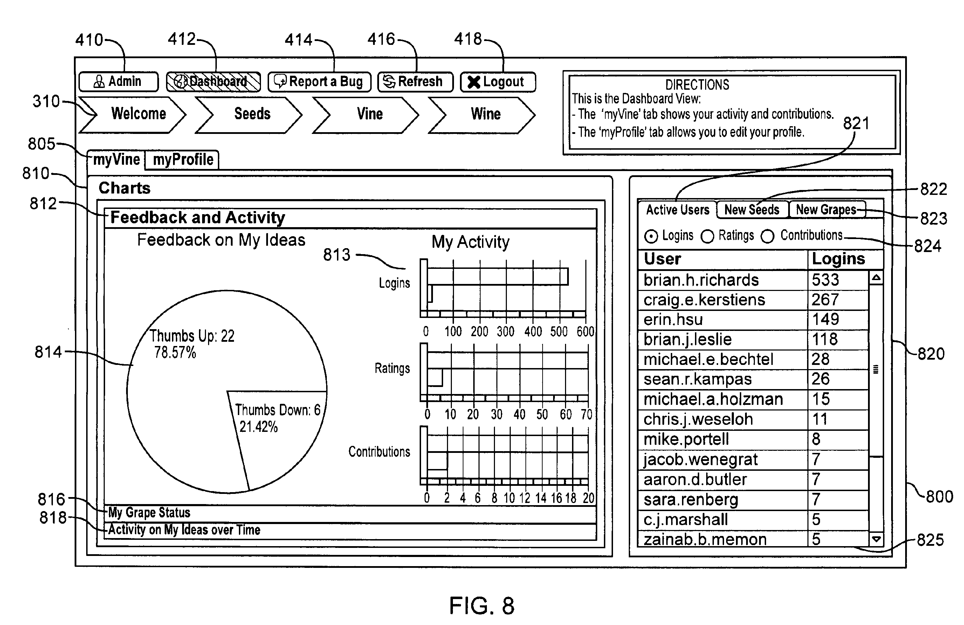

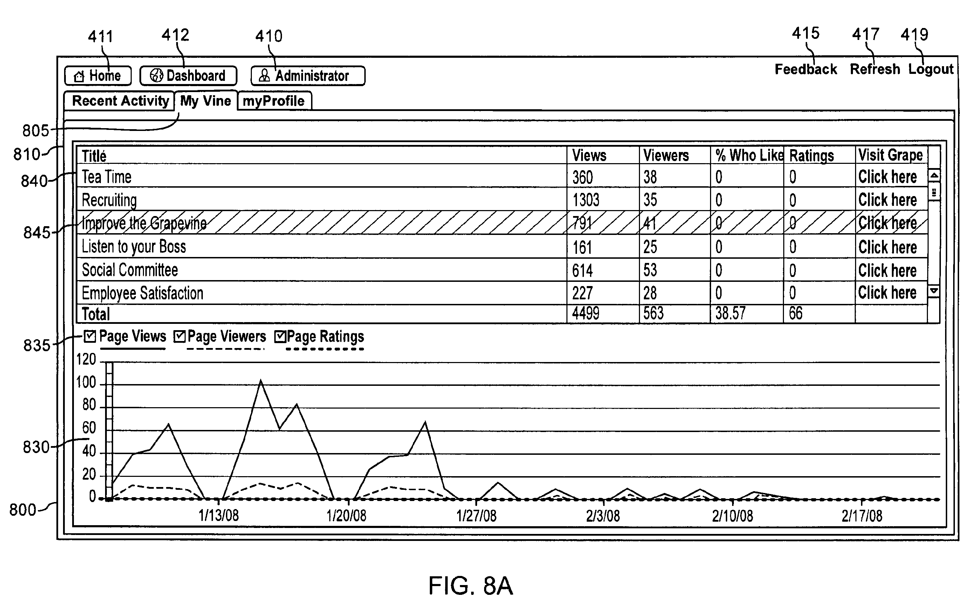

The service provider 130 may provide the users 120A-N with an interface for viewing a summary of their activity with the service provider 130. The summary may include one or more graphs displaying the activity of the users 120A-N, such as a pie graph, a bar graph, or generally any graph capable of reporting the activity of the users 120A-N. The interface may also allow the users 120A-N to view or modify their user profile. The interface for providing user activity data may be discussed in more detail in Fig. 8.

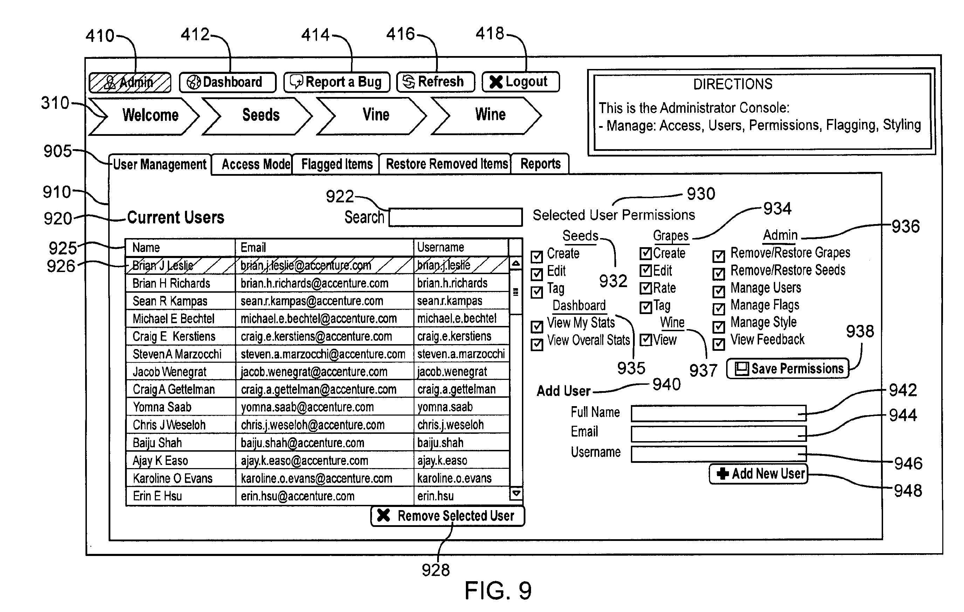

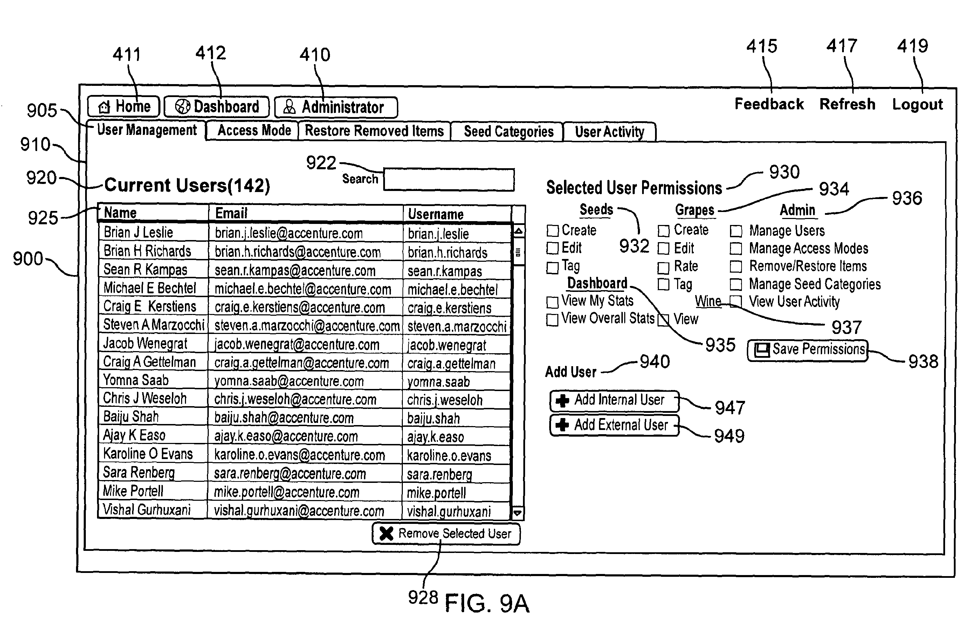

The service provider 130 may provide an administrator interface to authorized content providers 110A-N and or users 120A-N, such as the content provider A 110A. The administrator interface may allow the content provider A 110A to add and/or remove users 120A-N and set the permissions of users 120AN. The permissions may include creating initial ideas, creating follow-up ideas, rating ideas, viewing ideas, or generally any permission that may be set in the system 100. The administrator interface is discussed in more detail in Fig. 9.

Alternatively or in addition, in operation one of the content providers 110A-N, such as the content provider A 110A may provide an item for review. The item may be a question whose answer is of value to the content provider A 110A. The content provider A 110A may identify a period of time that the question should be provided to the users 120A-N for innovation. The content provider A 110A may also identify a set of the users 120A-N that the question should be provided to. The content provider A 110A may select a set of the users 120A-N based on the demographics of the users 120A-N, or generally any characteristic of the users 120A-N capable of segmenting the users 120A-N. The users 120A-N may be required to provide demographic information when they first register for the system 100. In the case of an organization, the human resources department of the organization may have access to the demographic information of the users 120A-N.

The service provider 130 may provide the item to the users 120A-N for review and/or innovation. The users 120A-N may provide one or more responses to the item. In the case of a question, the users 120A-N may provide one or more answers to the question. The service provider 130 may receive the responses from the users and may provide the responses to all of the users 120A-N. The users 120A-N may provide responses to the responses and the service provider may provide the responses to the responses to the users 120A-N. For example, in the case of a question, the first level of responses may be answers to the questions. The second level of responses, in response to the first level of responses, may be modifications to the answers or more detail added to the answers. The users 120A-N may then provide a third level of responses, in response to the second level responses, which may be further revisions or details added to the second level of responses.

As the service provider 130 receives responses from a user A 120A, the service provider 130 may continue to provide the responses to the users 120A-N. The users 120A-N may continue to provide responses to other responses, or responses to the initial item throughout the innovation period. The users 120A-N may also provide ratings of any of the responses. The users 120A-N may rate any of the responses in the innovation paths. For example, the users 120A-N may rate a response with either "like," or "don't like." The "like" response may have a value of 1, while the "don't like" response may have a value of 0.

Once the innovation period indicated by the content provider A 110A has expired, the service provider 130 may stop providing the item, and the responses, to the users 120A-N. The service provider 130 may then calculate a total rating for each of the responses received from the users 120A-N. The total rating for a response may be a sum of.the values of all the ratings the response received. For example, in the case of "like" and "don't like," the service provider may add a 1 to the total rating of the response for every "like" the response received and a 0 to the total rating of the response for every "don't like" the response received. The service provider 130 may order the responses based on the total rating of each response. The service provider 130 may provide the ordered list of responses to the content provider A 110A. The ordered list may allow the content provider A 110A to quickly and efficiently determine the most valuable responses, or innovations, to arise from the innovation period. The content provider A 110A may select one or more responses as the most valuable responses and may provide an indication of the most valuable responses to the service provider 130.

Alternatively or in addition the service provider 130 may provide reports the users 120A-N and/or the content providers 110A-N. The reports may display data related to the activity of the users 120A-N. Alternatively or in addition the reports may summarize the items provided to the system 100 for innovation and the responses that were selected by the content providers 110A-N for each item.

One or more of the users 120A-N and/or the content providers 110A-N may be an administrator of the system 100. An administrator may be generally responsible for maintaining the system 100 and may be responsible for maintaining the permissions of the users 120A-N and the content providers 110AN. The administrator may need to approve of any new users 120A-N in the system 100 before the users 120A-N are allowed to provide responses and ratings to the system 100.

Alternatively or in addition, in operation one of the content providers 110A-N, such as the content provider A 110A may provide an item for review. The item may be a question whose answer is of value to the content provider A 110A. The content provider A 110A may identify a period of time that the question should be provided to the users 120A-N for review. The content provider A 110A may also identify a set of the users 120A-N that the question should be provided to. The content provider A 110A may use the user quality score of the users 120A-N as a threshold for users 120A-N to be included in the review. For example, the content provider A 110A may specify that only the users 120A-N with user quality scores in the top ten percent should be provided the item for review. The content provider A 110A may also select a set of the users 120A-N based on the demographics of the users 120A-N, or generally any characteristic of the users 120A-N capable of segmenting the users 120A-N. The users 120A-N may be required to provide demographic information when they first register for the system 100. In the case of an organization the human resources department of the organization may provide the demographic information of the users 120A-N.

The service provider 130 may provide the item to the users 120A-N for review. The users 120A-N may be notified that the item is available, such as via an email notification. The users 120A-N may provide one or more responses to the item. In the case of a question, the users 120A-N may provide one or more answers to the question. The service provider 130 may receive the responses from the users 120A-N, and may provide the responses to the other users 120A-N. The users 120A-N may rate the responses.

Once the review period indicated by the content provider A 110A has expired, the service provider 130 may stop providing the item to the users 120AN. The service provider 130 may then calculate a total rating for each response received from the users 120A-N. The total rating for a response may be a sum of each of the weighted ratings the response received from the users 120A-N. A weighted rating may be equal to the value of the rating received from a user A 120A multiplied by the user response quality score of the user A 120A. The service provider 130 may order the responses based on the total rating of each response. The service provider 130 may provide the ordered list of responses to the content provider A 110A who provided the initial item. The ordered list of responses may allow the content provider A 110A to quickly and efficiently determine the most accurate response. The content provider A 110A may select one or more response as the most accurate response or responses. The content provider A 110A may provide an indication of the selection of the most accurate response or responses to the service provider 130.

At set intervals of time, such every 3 months, the service provider 130 may determine which of the users 120A-N achieved a user quality score above the incentive threshold. The users 120A-N with a user quality score above the threshold may be offered a reward. Alternatively or in addition the service provider 130 may award the users 120A-N immediately when their user quality score reaches the incentive threshold.

The service provider 130 may provide one or more reports to the content providers 110A-N and/or the users 120A-N indicating the activity of the users 120A-N and/or the content providers 110A-N, such as displaying the user response quality scores of the users 120A-N. The reports may also provide information about the items rated by the system 100 and the selected response for each initial item.

One or more of the users 120A-N and/or the content providers 110A-N may be an administrator of the system 100. An administrator may be generally responsible for maintaining the system 100 and may be responsible for maintaining the permissions of the users 120A-N and the content providers 110AN. The administrator may need to approve of any new users 120A-N in the system 100 before the users 120A-N are allowed to provide responses and ratings to the system 100.

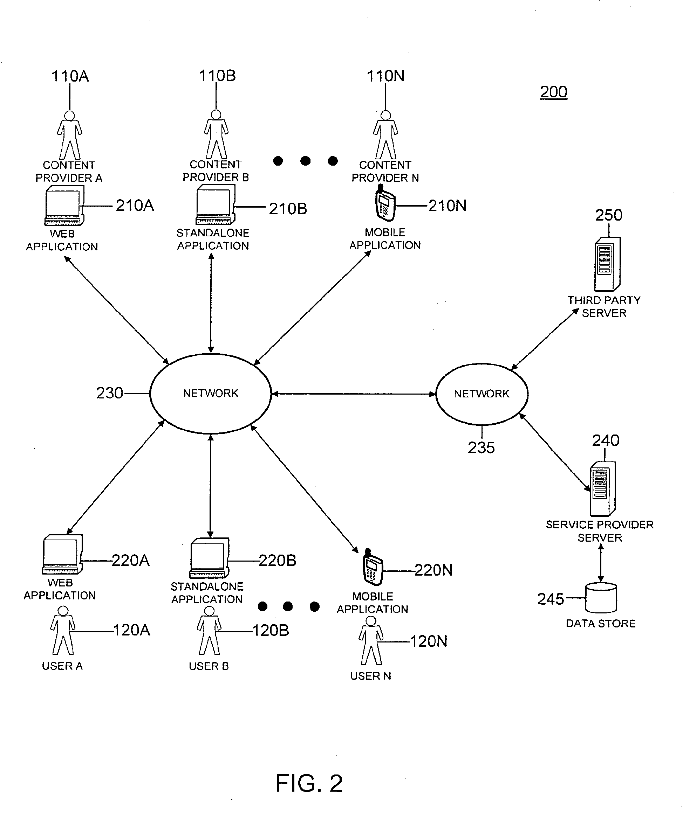

Fig. 2 provides a simplified view of a network environment 200 implementing the system of Fig. 1 or other systems for providing an interface for collaborative innovation. Not all of the depicted components may be required, however, and some implementations may include additional components not shown in the figure. Variations in the arrangement and type of the components may be made without departing from the spirit or scope of the claims as set forth herein. Additional, different or fewer components may be provided.

The network environment 200 may include one or more web applications, standalone applications and mobile applications 210A-N, which may be client applications of the content providers 110A-N. The system 200 may also include one or more web applications, standalone applications, mobile applications 220A-N, which may be client applications of the users 120A-N. The web applications, standalone applications and mobile applications 210A-N, 220AN, may collectively be referred to as client applications 210A-N, 220A-N. The system 200 may also include a network 230, a network 235, the service provider server 240, a data store 245, and a third party server 250.

Some or all of the service provider server 240, and third-party server 250 may be in communication with each other by way of network 235. The third-party server 250 and service provider server 240 may each represent multiple linked computing devices. Multiple distinct third party servers, such as the third-party server 250, may be included in the network environment 200. A portion or all of the third-party server 250 may be a part of the service provider server 240.

The data store 245 may be operative to store data, such as user information, initial items, responses from the users 120A-N, data relating to ideas of the users 120A-N, ratings by the users 120A-N, user response quality scores, or generally any data that may need to be stored in a data store 245. The data store 245 may include one or more relational databases or other data stores that may be managed using various known database management techniques, such as, for example, SQL and object-based techniques. Alternatively or in addition the data store 245 may be implemented using one or more of the magnetic, optical, solid state or tape drives. The data store 245 may be in direct communication with the service provider server 240. Alternatively or in addition the data store 245 may be in communication with the service provider server 240 through the network 235.

The networks 230, 235 may include wide area networks (WAN), such as the internet, local area networks (LAN), campus area networks, metropolitan area networks, or any other networks that may allow for data communication. The network 230 may include the Internet and may include all or part of network 235; network 235 may include all or part of network 230. The networks 230, 235 may be divided into sub-networks. The sub-networks may allow access to all of the other components connected to the networks 230, 235 in the system 200, or the sub-networks may restrict access between the components connected to the networks 230, 235. The network 235 may be regarded as a public or private network connection and may include, for example, a virtual private network or an encryption or other security mechanism employed over the public Internet, or the like.

The content providers 110A-N may use a web application 210A, standalone application 210B, or a mobile application 210N, or any combination thereof, to communicate to the service provider server 240, such as via the networks 230, 235. Similarly, the users 120A-N may use a web application 220A, a standalone application 220B, or a mobile application 220N to communicate to the service provider server 240, via the networks 230, 235.

The service provider server 240 may provide user interfaces to the content providers 110A-N via the networks 230, 235, through the web applications, standalone applications or mobile applications 210A-N. The service provider server 240 may also provide user interfaces to the users 120A-N via the networks 230, 235, through the web applications, standalone applications or mobile applications 220A-N. The user interfaces may be designed using ADOBE FLEX. The user interfaces may be initially downloaded when the applications 210A-N, 220A-N first communicate with the service provider server 240. The client applications 210A-N, 220A-N may download all of the code necessary to implement the user interfaces, but none of the actual data. The data may be downloaded from the service provider server 240 as needed.

The user interfaces may be developed using the singleton development pattern, utilizing the model locator found within the cairngorm framework. Within the singleton pattern there may be several data structures each with a corresponding data access object. The data structures may be structured to receive the information from the service provider server 240.

The user interfaces of the content providers 110A-N may be operative to allow a content provider A 110A to provide an initial item, and allow the content provider A 110A to specify a period of time for review of the item. The user interfaces of the users 120A-N may be operative to display the initial item to the users 120A-N, allow the users 120A-N to provide responses and ratings, and display the responses and ratings to the other users 120A-N. The user interfaces of the content providers 110A-N may be further operative to display the ordered list of responses to the content provider A 110A and allow the content provider to provide an indication of the selected response.

The web applications, standalone applications and mobile applications 210A-N, 220A-N may be connected to the network 230 in any configuration that supports data transfer. This may include a data connection to the network 230 that may be wired or wireless. Any of the web applications, standalone applications and mobile applications 210A-N, 220A-N may individually be referred to as a client application. The web applications 210A, 220A may run on any platform that supports web content, such as a web browser or a computer, a mobile phone, personal digital assistant (PDA), pager, network-enabled television, digital video recorder, such as TIVO®, automobile and/or any appliance capable of data communications.

The standalone applications 210B, 220B may run on a machine that may have a processor, memory, a display, a user interface and a communication interface. The processor may be operatively connected to the memory, display and the interfaces and may perform tasks at the request of the standalone applications 210B, 220B or the underlying operating system. The memory may be capable of storing data. The display may be operatively connected to the memory and the processor and may be capable of displaying information to the content provider B 110B or the user B 120B. The user interface may be operatively connected to the memory, the processor, and the display and may be capable of interacting with a user B 120B or a content provider B 110B. The communication interface may be operatively connected to the memory, and the processor, and may be capable of communicating through the networks 230, 235 with the service provider server 240, and the third party server 250. The standalone applications 210B, 220B may be programmed in any programming language that supports communication protocols. These languages may include: SUN JAVA®, C++, C#, ASP, SUN JAVASCRIPT®, asynchronous SUN JAVASCRIPT®, or ADOBE FLASH ACTIONSCRIPT®, ADOBE FLEX, and PHP, amongst others.

The mobile applications 210N, 220N may run on any mobile device that may have a data connection. The data connection may be a cellular connection, a wireless data connection, an internet connection, an infra-red connection, a Bluetooth connection, or any other connection capable of transmitting data.

The service provider server 240 may include one or more of the following: an application server, a data store, such as the data store 245, a database server, and a middleware server. The application server may be a dynamic HTML server, such as using ASP, JSP, PHP, or other technologies. The service provider server 240 may co-exist on one machine or may be running in a distributed configuration on one or more machines. The service provider server 240 may collectively be referred to as the server. The service provider server 240 may implement a server side Wiki engine, such as ATLASSIAN CONFLUENCE. The service provider server 240 may receive requests from the users 120A-N and the content providers 110A-N and may provide data to the users 120A-N and the content providers 110A-N based on their requests. The service provider server 240 may communicate with the client applications 210A-N, 220A-N using extensible markup language (XML) messages.

The third party server 250 may include one or more of the following: an application server, a data source, such as a database server, and a middleware server. The third party server may implement any third party application that may be used in a collaborative innovation system, such as a user verification system. The third party server 250 may co-exist on one machine or may be running in a distributed configuration on one or more machines. The third party server 250 may receive requests from the users 120A-N and the content providers 110A-N and may provide data to the users 120A-N and the content providers 110A-N based on their requests.

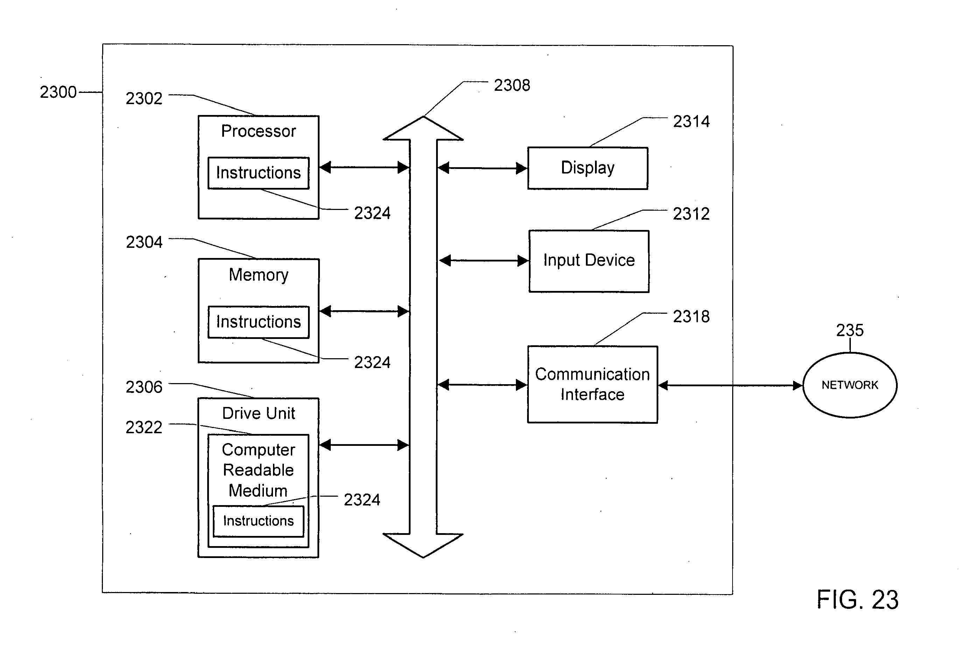

The service provider server 240 and the third party server 250 may be one or more computing devices of various kinds, such as the computing device in Fig. 23. Such computing devices may generally include any device that may be configured to perform computation and that may be capable of sending and receiving data communications by way of one or more wired and/or wireless communication interfaces. Such devices may be configured to communicate in accordance with any of a variety of network protocols, including but not limited to protocols within the Transmission Control Protocol/Internet Protocol (TCP/IP) protocol suite. For example, the web applications 210A, 210A may employ HTTP to request information, such as a web page, from a web server, which may be a process executing on the service provider server 240 or the third-party server 250.

There may be several configurations of database servers, such as the data store 245, application servers, and middleware servers included in the service provider server 240, or the third party server 250. Database servers may include MICROSOFT SQL SERVER®, ORACLE®, IBM DB2® or any other database software, relational or otherwise. The application server may be APACHE TOMCAT®, MICROSOFT IIS®, ADOBE COLDFUSION®, or any other application server that supports communication protocols. The middleware server may be any middleware that connects software components or applications.

The networks 230, 235 may be configured to couple one computing device to another computing device to enable communication of data between the devices. The networks 230, 235 may generally be enabled to employ any form of machine-readable media for communicating information from one device to another. Each of networks 230, 235 may include one or more of a wireless network, a wired network, a local area network (LAN), a wide area network (WAN), a direct connection such as through a Universal Serial Bus (USB) port, and the like, and may include the set of interconnected networks that make up the Internet. The networks 230, 235 may include any communication method by which information may travel between computing devices.

In operation the client applications 210A-N, 220A-N may make requests back to the service provider server 240. The service provider server 240 may access the data store 245 and retrieve information in accordance with the request. The information may be formatted as XML and communicated to the client applications 210A-N, 220A-N. The client applications 210A-N, 220A-N may display the XML appropriately to the users 120A-N, and/or the content providers 110A-N.

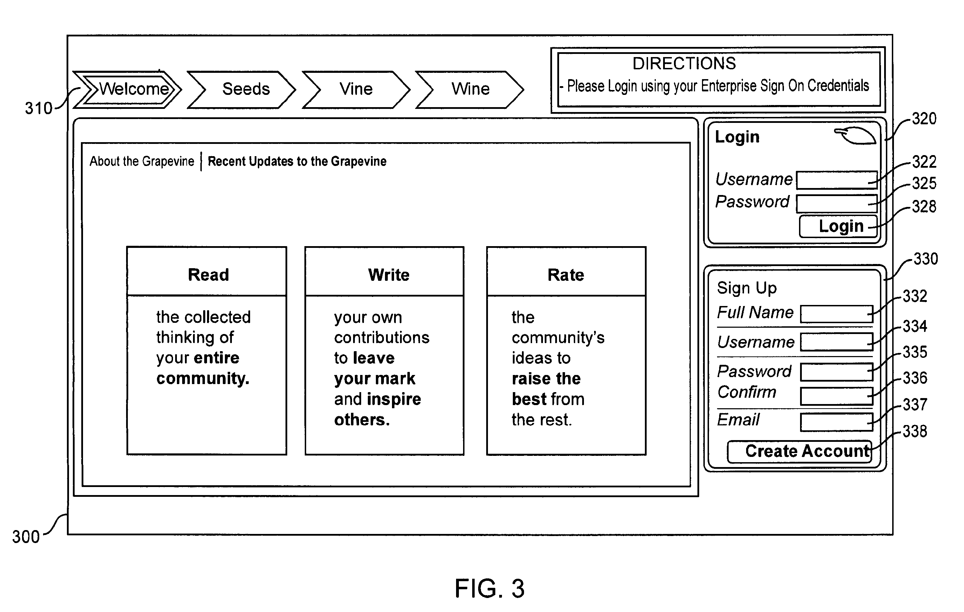

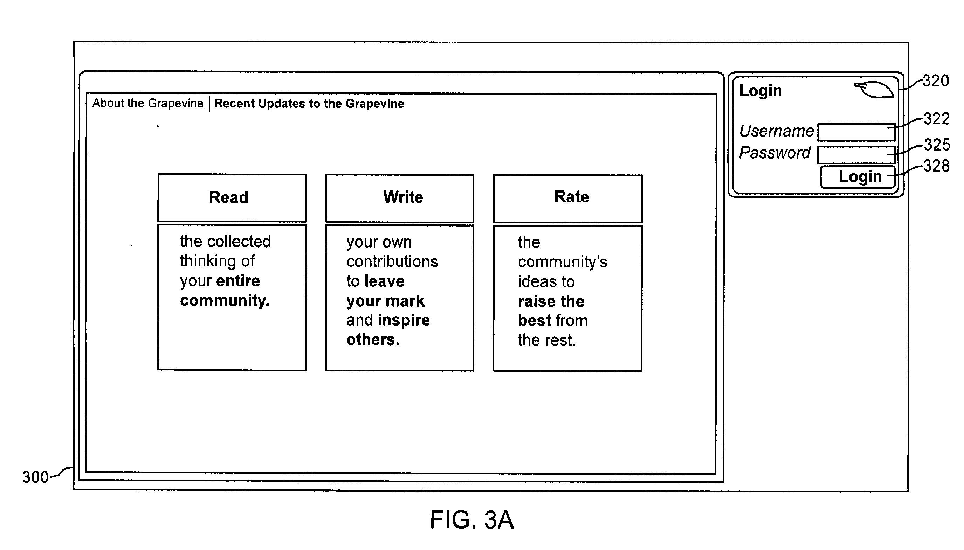

Fig. 3 is a screenshot of a user login interface 300 in the system of Fig. 1, or other systems for providing an interface for collaborative innovation. The system 100 may display the user login interface 300 to the user A 120A when the user A 120A first interacts with the system 100. The user A 120A may use the user login interface 300 to log into the system 100, or create a new account to access the system 100. The user login interface 300 may include a navigation bar 310, a login subsection 320, and a sign up subsection 330. The login subsection 320 may include a username field 322, a password field 325, and a login button 328. The sign up subsection 330 may include a full name field 332, a username field 334, a password field 335, a confirm password field 336, an email field 337, and a create account button 338.

In operation the user A 120A may enter their username in the username field 322 and their password in the password field 325. The user A 120A may then click on the login button 328 to login into the system 100. If the user A 120A does not already have an account the user A 120A may fill in the fields in the sign up subsection 330, and click on the create account button 338, to create a new account. The user A 120A may be granted immediate access to the system 100, or an administrator and/or one of the content providers 110A-N may need to approve of the user A 120A before the user A 120A is granted access to the system. In this instance the system 100 may notify the user A 120A when they have been granted access, such as an email notification. The navigation bar 310 displays the current screen the user A 120A is viewing. Alternatively or in addition there may be multiple user login interfaces 300. In this instance the system 100 may display a different user login interface 300 depending upon whether the user A 120A is an internal user of an organization or is a client of the organization.

Fig. 3A is a screenshot of an alternative user login interface 300 in the system of Fig. 1, or other systems for providing an interface for collaborative innovation. The system 100 may display the alternative user login interface 300 to the user A 120A when the user A 120A first interacts with the system 100. The user A 120A may use the alternative user login interface 300 to log into the system 100. The alternative user login interface 300 may include a login subsection 320. The login subsection 320 may include a username field 322, a password field 325, and a login button 328. In operation the user A 120A may enter their username in the username field 322 and their password in the password field 325. The user A 120A may then click on the login button 328 to login into the system 100.

Fig. 4 is a screenshot of an initial item selection interface 400 in the system of Fig. 1, or other systems for providing an interface for collaborative innovation. The system 100 may display the initial item selection interface 400 to the user A 120A after the user A 120A logs into the system 100. The user A 120A may use the initial item selection interface 400 to search, filter, and select one or more of the initial items. The initial item selection interface 400 may include a navigation bar 310, an admin button 410, a dashboard button 412, a report a bug button 414, a search button 416, a logout button 418, a filter subsection 420 and an initial item subsection 430. The filter subsection 420 may include a sort by selector 422, a search field 424, a number of ideas filter 425, a total views filter 426, a unique viewers filter 428 and a clear filters button 429. The initial item subsection 430 may include a create new seed button 432, a hide filters button 434, and initial items 438.

In operation, the user A 120A may click on the admin button 410 to view the admin interface. The user A 120A may need certain permissions to access the admin interface. The admin interface may be described in more detail in Fig. 9. The user A 120A may click on the dashboard button 412 to view the dashboard interface. The dashboard interface may be described in more detail in Fig. 8. The user A 120A may click on the refresh button 416 to refresh the data displayed in the initial item selection interface 400. The user A 120A may click on the logout button 418 to log out of the system 100.

The user A 120A may use the filter subsection 420 to sort and/or filter the initial items 438. The sort by selector 422 may be used to sort by one or more characteristics of the initial items 438, such as the title, creator, creation date, and number of grape ideas of the initial items 438. The search field 424 may be used to search the initial items 438. The filters 425, 426, 428, may be used to filter the seeds ideas 438. The clear filters button 429 may be used to reset the filters 425, 426, 428.

The user A 120A may view one or more initial items 438 in the initial item subsection 430. The user A 120A may hide the filter subsection 420 by clicking on the hide filters button 434. The user A 120A may create a new initial item by clicking on the create new seed button 432. The user A 120A may be required to have certain permissions in order to create a new initial item. The user A 120A may click on one of the initial items 438 to view detailed information about the initial item. The detailed information screen may be discussed in more detail in Fig. 5.

Alternatively or in addition the initial item selection interface 400 may allow a user A 120A to flag an initial item for potential removal by an administrator. The administrator may review the initial item and determine whether to remove the initial item. There may be two types of seed creation modes, a crowd controlled mode, where any of the users 120A-N can create an initial item, and a managed mode, where only administrator users can create an initial item.

Fig. 4A is a screenshot of an alternative initial item selection interface 400 in the system of Fig. 1, or other systems for providing an interface for collaborative innovation. The system 100 may display the alternative initial item selection interface 400 to the user A 120A after the user A 120A logs into the system 100. The user A 120A may use the alternative initial item selection interface 400 to search, filter, and select one or more of the initial items. The initial item selection interface 400 may include an admin button 410, a dashboard button 412, a home button 411, a feedback link 415, a refresh link 417, a logout link 419, and an initial item subsection 430. The initial item subsection 430 may include an advanced filters button 431, a create new seed button 432, a search field 433, a search dropdown box 435, a selected initial item 437, an initial item action buttons 439, and initial items 438.

In operation, the user A 120A may click on the admin button 410 to view the admin interface. The user A 120A may need certain permissions to access the admin interface. The admin interface may be described in more detail in Fig. 9. The user A 120A may click on the dashboard button 412 to view the dashboard interface. The dashboard interface may be described in more detail in Fig. 8. The user A 120A may click on the refresh link 417 to refresh the data displayed in the initial item selection interface 400. The user A 120A may click on the logout button 418 to log out of the system 100. The user A 120A may click on the feedback link 415 to provide feedback on the system 100, such as to an administrator. The home button 411 may return the user to the user login interface 300. Alternatively or in addition the user A 120A may specify any screen or interface in the system 100 as a home screen. When the user A 120A clicks on the home button 411 the user A 120A may be displayed the specified home screen.

The user A 120A may view one or more initial items 438 in the initial item subsection 430. The user A 120A may view advanced filters, such as the filters in the filter subsection 420, by clicking on the advanced filters button 431. The user A 120A may create a new initial item by clicking on the create new seed button 432. The user A 120A may be required to have certain permissions in order to create a new initial item. The user A 120A may click on one of the initial items 438 to select an initial item and/or view detailed information about the initial item. The detailed information screen may be discussed in more detail in Fig. 5.

The selected item 437 may be an item selected by the user A 120A. When the user A 120A selects an item the user A 120A may use the selected item action buttons 439 to perform actions on the selected item 437. The actions may include emailing the item, receiving additional information on the item, attaching an item, such as a file, to the item, editing the item and deleting the item. If the user A 120A selects to edit the selected item 437 the user A 120A may be taken to the detailed information screen of Fig. 5.

The user A 120A may use the search field 433 to search for initial items. The user A 120A may use the search dropdown box 435 to filter the items searched, such as by only searching the unread items.

Fig. 5 is a screenshot of an initial item details screen 500 in the system of Fig. 1, or other systems for providing an interface for collaborative innovation. The system 100 may display the initial items details screen 500 to the user A 120A when the user A 120A clicks on one of the initial items 438 in the initial item subsection 430 of the initial item selection interface 400 in Fig. 4. The user A 120A may use the initial item details screen 500 to view detailed information regarding the selected initial item. The initial item details screen 500 may include a navigation bar 310, an admin button 410, a dashboard button 412, a report a bug button 414, a refresh button 416, a logout button 418, a seed details subsection 510, an initial item 520, a seed information subsection 530, a view vine button 540, an additional initial items subsection 550, a back button 560, and a seed title 570. The seed details subsection 510 may include a show filters button 512, a create new seed button 514, an edit this seed button 516, and a remove this seed button 518.

In operation the user A 120A may view detailed information about the initial item in the initial item information subsection 530. The detailed information may include the creator of the initial item, the creation date of the initial item, the number of grape ideas innovated from the initial item, the total number of views of the initial item and the number of unique viewers of the initial item. The user A 120A may use the show filters button 512 to view the current filter settings. The user A 120A may use the create new seed button 514 to create a new initial item. The initial item may be edited with the edit this seed button 516 and removed with the remove this seed button 518. The system 100 may require that the user A 120A have the appropriate permissions in order to add, edit, or delete an initial item. The user A 120A may view the details of another initial item by clicking on an initial item in the additional initial items subsection 550. The user A 120A may click on the back button 560 to return to the initial item selection interface 400 as discussed in Fig. 4. The user A 120A may click on the view vine button 540 to view the ideas innovated from the initial item in the initial item collaborative innovation screen 600 discussed in more detail in Fig. 6.

Fig. 6 is a screenshot of an initial item collaborative innovation screen 600 in the system of Fig. 1, or other systems for providing an interface for collaborative innovation. The system 100 may display the initial item collaborative innovation screen 600 to the user A 120A when the user A 120A clicks on the view vine button 540 in the initial item details screen 500, as discussed in Fig. 5. The user A 120A may use the initial item collaborative innovation screen 600 to view, add, and rate ideas that have been innovated from the initial item. The initial item collaborative innovation screen 600 may display a graphical depiction of the ideas in the form a tree. In the system 100, the graphical tree-like depiction may be referred to as a graphical hierarchical representation of the ideas. The initial item collaborative innovation screen 600 may include a navigation bar 310, an admin button 410, a dashboard button 412, a report a bug button 414, a refresh button 416, a logout button 418, an idea display section 610 and an idea modification section 640. The idea display section 610 may include an idea title 612, an initial item 614, an idea selector subsection 620 and a collaborative display subsection 630. The idea selector subsection 620 may include a sort by selector 622, a search field 624, and an idea list 625. The collaborative display subsection 630 may include a legend display 631, a show list view checkbox 632, a display modifier 634, a graphical collaborative display 635, and an idea detail display 638. The idea modification section 640 may include a selected idea title 642, a like button 644, a don't like button 646, an idea enhancement field 648, an enhance button 652, an idea information display 650, an add tag button 658, an edit button 656, and a delete button 654.

In operation the user A 120A may view a graphical display of the collaborative innovation for a selected initial item, also known as the graphical hierarchical representation of the ideas, in the graphical collaborative display 635. The graphical collaborative display 635 may display a visual representation of the collaborative innovation process. The user A 120A may modify the data that is displayed in the graphical collaborative display 635 by using the idea selector subsection 620. The user may view ideas in the idea list 625 and may change the ideas displayed in the idea list by using the sort by selector 622 and the search field 624.

The user A 120A may scroll and zoom in and zoom out of the graphical collaborative display 635 using the display modifier 634. The graphical collaborative display 635 may include one or more nodes representing ideas. The user A 120A may click on one of the nodes to view detailed information regarding the idea in the idea detail display 638. Alternatively or in addition the information in the idea detail display 638 may be automatically displayed when the user A 120A uses a pointing interface, such as a mouse, to hover over a node in the graphical collaborative display 635. The user A 120A may be able to easily move around the graphical collaborative display 635 at any zoom level. The user A 120A may zoom in and zoom out using the + and - buttons, or by using a mouse wheel. The legend display 631 may color code the ideas based on whether the user A 120A has contributed, viewed, selected, or rated the idea.

The user A 120A may use the idea modification section 640 to modify or enhance a selected idea. The user A 120A may click on the like it button 644 if they like the idea, or click on the don't like it button 646 if they don't like the idea. The user A 120A may create an idea enhancing the selected idea by entering the idea in the idea enhancement field 648 and clicking the enhance button 652. The idea added by the user A 120A may appear in the graphical collaborative display 635 as a node connected to the node representing the idea that was enhanced. The user A 120A may view details of the selected idea in the idea information display 650. The user A 120A may add a tag to the idea by clicking on the add tag button 658. The user A 120A may tag an idea with any searchable keywords. The user A 120A may edit the idea by clicking on the edit button 656 and may delete the selected idea by clicking on the delete button 654.

Fig. 6A is a screenshot of an alternative initial item collaborative innovation screen 600 in the system of Fig. 1, or other systems for providing an interface for collaborative innovation. The system 100 may display the alternative initial item collaborative innovation screen 600 to the user A 120A when the user A 120A clicks on the view vine button 540 in the initial item details screen 500, as discussed in Fig. 5. The user A 120A may use the alterative initial item collaborative innovation screen 600 to view, add, and rate ideas that have been innovated from the initial item. The alternative initial item collaborative innovation screen 600 may display a graphical hierarchical representation of the ideas in the form a tree-like structure. In the system 100, the graphical tree-like structure may be referred to as a graphical hierarchical representation of the ideas. The alternative initial item collaborative innovation screen 600 may include an admin button 410, a home button 411, a dashboard button 412, a feedback link 415, a refresh link 417, a logout link 419, an idea display section 610 and an idea modification section 640. The idea display section 610 may include an idea title 612, a search field 615, a grapes button 616, a wine button 618, and a collaborative display subsection 630. The collaborative display subsection 630 may include a legend display 631, a display modifier 634, a rotate button 633, a zoom bar 636, a graphical collaborative display 635, an idea detail display 638, and a list/graph toggle button 639. The idea modification section 640 may include a selected idea title 642, a like button 644, a don't like button 646, an idea enhancement field 648, an enhance button 652, an idea information display 650, an add tag button 658, an edit button 656, an add attachment button 659, an email button 657, and a delete button 654.

In operation the user A 120A may view a graphical display of the collaborative innovation for a selected initial item, also known as the graphical hierarchical representation of the ideas, in the graphical collaborative display 635. The graphical collaborative display 635 may display a visual representation of the collaborative innovation process. The user A 120A may toggle between the list view display and the graph view display using the list/graph toggle button 639. Fig. 6B discusses the list view in more detail.

The user A 120A may move around the graphical collaborative display 635 using the display modifier 634. The user A 120A may zoom in and out of the graphical collaborative display using the zoom bar 636. The user A 120A may rotate the graphical collaborative display 635 using the rotate button 633. The graphical collaborative display 635 may include one or more nodes representing ideas. The user A 120A may click on one of the nodes to view detailed information regarding the idea in the idea detail display 638. Alternatively or in addition the information in the idea detail display 638 may be automatically displayed when the user A 120A uses a pointing interface, such as a mouse, to hover over a node in the graphical collaborative display 635. The legend display 631 may color code the ideas based on whether the user A 120A has contributed, viewed, selected, or rated the idea.

The user A 120A may use the idea modification section 640 to modify, enhance, or rate a selected idea. The user A 120A may click on the like it button 644 if they like the idea, or click on the don't like it button 646 if they don't like the idea. The user A 120A may create an idea enhancing the selected idea by entering the idea in the idea enhancement field 648 and clicking the enhance button 652. The idea added by the user A 120A may appear in the graphical collaborative display 635 as a node connected to the node representing the idea that was enhanced. The user A 120A may view details of the selected idea in the idea information display 650. The user A 120A may add a tag to the idea by clicking on the add tag button 658. The user A 120A may tag an idea with any searchable keywords. The user A 120A may add an attachment to the idea by clicking on the attachment button 659. The user A 120A may email the selected idea by clicking on the email button 657. The user A 120A may edit the idea by clicking on the edit button 656 and may delete the selected idea by clicking on the delete button 654.

The user A 120A may search through the ideas by using the search field 615. The user A 120A may toggle whether the only the best ideas are searched or whether all the ideas are searched by using the grapes button 616 and the wine button 618. If the user A 120A clicks on the wine button 618 the search may be limited to the best ideas. If the user A 120A clicks on the grapes button 616, the search may be expanded to all the ideas. Fig. 6 may use the term "grape" to refer to all of the ideas stemming from the initial ideas, and may use the word "wine" to refer to the best ideas stemming from the initial idea.

Fig. 6B is a screenshot of a list view in an alternative initial item collaborative innovation screen 600 in the system of Fig. 1, or other systems for providing an interface for collaborative innovation. The system 100 may display the alternative initial item collaborative innovation screen 600 to the user A 120A when the user A 120A clicks on the view vine button 540 in the initial item details screen 500, as discussed in Fig. 5. Alternatively or in addition the user A 120A may click on the list/graph toggle button 639 in Fig. 6A, to be displayed the list view in the alternative initial item collaborative innovation screen 600. The user A 120A may use the alterative initial item collaborative innovation screen 600 to view, add, and rate ideas that have been innovated from the initial item. The alternative initial item collaborative innovation screen 600 may display a graphical hierarchical representation of the ideas in the form a tree-like structure. In the system 100, the graphical tree-like structure may be referred to as a graphical hierarchical representation of the ideas. The alternative initial item collaborative innovation screen 600 may include an admin button 410, a home button 411, a dashboard button 412, a feedback link 415, a refresh link 417, a logout link 419, an idea display section 610 and an idea modification section 640. The idea display section 610 may include an idea title 612, a search field 615, a grapes button 616, a wine button 618, and a collaborative list subsection 660. The collaborative list subsection 660 may include an ideas table 662 and a selected idea 665. The idea modification section 640 may include a selected idea title 642, a like button 644, a don't like button 646, an idea enhancement field 648, an enhance button 652, an idea information display 650, an add tag button 658, an edit button 656, an add attachment button 659, an email button 657, and a delete button 654.

In operation the user A 120A may view a list of the ideas in the ideas table 662. The selected idea 665 may represent an idea the user A 120A selected from the ideas table. The selected idea 665 may be enhanced or rated in the idea modification subsection 640. The user A 120A may toggle to the graph view display by using the list/graph toggle button 639. Fig. 6A discusses the graph view in more detail. The ideas table 662 may display the ideas in a thread view. The thread view may first display an initial idea with the enhancements to the initial idea listed below the initial idea. Enhancements to the enhancements may be similarly situated below the idea and/or enhancement they were derived from.

The user A 120A may use the idea modification section 640 to modify, enhance, or rate a selected idea. The user A 120A may click on the like it button 644 if they like the idea, or click on the don't like it button 646 if they don't like the idea. The user A120A may create an idea enhancing the selected idea by entering the idea in the idea enhancement field 648 and clicking the enhance button 652. The idea added by the user A 120A may appear in the graphical collaborative display 635 as a node connected to the node representing the idea that was enhanced. The user A 120A may view details of the selected idea in the idea information display 650. The user A 120A may add a tag to the idea by clicking on the add tag button 658. The user A 120A may tag an idea with any searchable keywords. The user A 120A may add an attachment to the idea by clicking on the attachment button 659. The user A 120A may email the selected idea by clicking on the email button 657. The user A 120A may edit the idea by clicking on the edit button 656 and may delete the selected idea by clicking on the delete button 654.

The user A 120A may search through the ideas by using the search field 615. The user A 120A may toggle whether the only the best ideas are searched or whether all the ideas are searched by using the grapes button 616 and the wine button 618. If the user A 120A clicks on the wine button 618 the search may be limited to the best ideas. If the user A 120A clicks on the grapes button 616, the search may be expanded to all the ideas. Fig. 6 may use the term "grape" to refer to all of the ideas stemming from the initial ideas, and may use the word "wine" to refer to the best ideas stemming from the initial idea.

Fig. 7 is a screenshot of an initial item results screen 700 in the system of Fig. 1, or other systems for providing an interface for collaborative innovation. The system 100 may display the initial item results screen 700 to one of the content providers 110A-N, such as the content provider A 110A. The initial item results screen 700 may display a summary of the ideas that were innovated from the initial item. The ideas stemming from the initial item may be sorted based on the ratings received from the users 120A-N. The initial item results screen 700 may include a navigation bar 310, an admin button 410, a dashboard button 412, a report a bug button 414, a refresh button 416, a logout button 418, an initial item 614, a settings subsection 720, a summary subsection 730, and a selected idea subsection 740. The settings subsection 720 may include a like it selector 721, a number of ratings selector 722, a number of views selector 723, a number of unique viewers selector 724, a number of children selector 725, an age selector 726 and a reset button 727. The summary subsection 730 may include a rating category graph 736, an idea list 734, an advanced settings checkbox 737, and a selected idea 732. The selected idea subsection 740 may include a selected idea description display 742 and a selected idea details display 746.

The settings subsection 720 may be used to modify the weight given to each factor in the overall rating calculation. The selectors 721, 722, 723, 724, 725, 726 may be adjusted to change the weight afforded to each factor in the overall ratings calculations. The selectors 721, 722, 723, 724, 725, 726 may be reset by clicking on the reset button 727. The summary subsection 730 may display the ideas most highly rated by the users 120A-N in accordance with the weight of the factors indicated in the settings subsection 720. The user A 120A may use the advanced settings checkbox 737 to toggle the display of the settings subsection 720. The ratings category graph 736 may display ranges of the ratings for the selected initial item. The user A 120A may click on a bar in the ratings category graph 736 to change the range of ratings of the ideas displayed in the idea list 734.

The user A 120A may select an idea from the idea list 734 and view detailed information regarding the selected idea in the selected idea subsection 740. The user A 120A may view the description of the selected idea 732 in the selected idea description display 742. The user A 120A may view the details associated with the selected idea in the selected idea description display 746.

Fig. 7A is a screenshot of an alternative initial item results screen 700 in the system of Fig. 1, or other systems for providing an interface for collaborative innovation. The system 100 may display the alternative initial item results screen 700 to one of the content providers 110A-N, such as the content provider A 110A. The alternative initial item results screen 700 may display a summary of the ideas that were innovated from the initial item. The ideas stemming from the initial item may be sorted based on the ratings received from the users 120A-N. The initial item results screen 700 may include an admin button 410, a home button 411, a dashboard button 412, a feedback link 415, a refresh link 417, a logout link 419, a search field 615, a grapes button 616, a wine button 618, a settings subsection 720, a summary subsection 730, and a selected idea subsection 740. The settings subsection 720 may include a like it selector 721, a number of ratings selector 722, a number of unique viewers selector 724, a number of children selector 725, an age selector 726 and a reset button 727. The summary subsection 730 may include a rating category graph 736, an idea list 734, a selected rating bar 738, and a selected idea 732. The selected idea subsection 740 may include a selected idea 732, a selected idea description display 742, a selected idea details display 746, and a selected idea ratings display 748.

The settings subsection 720 may be used to modify the weight given to each factor in the overall rating calculation. The selectors 721, 722, 724, 725, 726 may be adjusted to change the weight afforded to each factor in the overall ratings calculations. The selectors 721, 722, 724, 725, 726 may be reset by clicking on the reset button 727. The summary subsection 730 may display the ideas most highly rated by the users 120A-N in accordance with the weight of the factors indicated in the settings subsection 720. The ratings category graph 736 may display ranges of the ratings for the selected initial item. The selected rating bar 738 in the ratings category graph 736 may be a bar selected by the user A 120A. The selected rating bar 738 in the ratings category graph 736 to change the range of ratings of the ideas displayed in the idea list 734.

The user A 120A may select an idea from the idea list 734 and view detailed information regarding the selected idea 732 in the selected idea subsection 740. The user A 120A may view the description of the selected idea 732 in the selected idea description display 742. The user A 120A may view the details associated with the selected idea 732, such as creation details, in the selected idea description display 746. The user A 120A may view ratings information of the selected idea 732 in the selected idea ratings display 748.

Fig. 8 is a screenshot of a user dashboard screen 800 in the system of Fig. 1, or other systems for providing an interface for collaborative innovation. The system 100 may display the user dashboard screen 800 to the user A 120A when the user A 120A clicks on the dashboard button 412. The user A 120A may use the user dashboard screen 800 to obtain a quick overview of recent changes that have occurred in the system 100. The user A 120A may also use the user dashboard screen 800 to view metrics regarding their use of the system 100 and the other users 120B-N use of the system 100. The user dashboard screen 800 may include a navigation bar 310, an admin button 410, a dashboard button 412, a report a bug button 414, a refresh button 416, a logout button 418, a vine tab 805, a charts subsection 810 and a user subsection 820. The charts subsection 810 may include a feedback and activity header 812, a grape status header 816, an activity header 818, a feedback graph 814, and an activity display 813. The user subsection 820 may include an active users tab 821, a new initial items tab 822, a new grape ideas tab 823, a display selector 824 and a user list 825.

In operation the user A 120A may view their activity in the charts subsection 810. The feedback graph 814 may display the number of ideas liked by the user A 120A and the number of ideas disliked by the user A 120A. The activity display 813 may display the activity of the user A 120A in the system 100. The activity display 813 may display the logins, ratings and contributions of the user A 120A. the user subsection 820 may display the activity of the other users 120B-N. The activity display 820 may display the logins, ratings and contributions of the other users 120B-N. The user A 120A may click on the new initial items tab 822 to view the new initial item activity or the user A 120A may click on the new grape ideas tab 823 to view the new grape idea activity.

The user A 120A may click on the grape status header 816 to view data associated with the status of their ideas. The user A 120A may click on the activity header 818 to view the activity on their ideas over a period of time. The user A 120A may click on the myProfile tab in the vine tab 805 to view the data associated with their user profile.

Fig. 8A is a screenshot of an alternative user dashboard screen 800 displaying the my vine tab in the system of Fig. 1, or other systems for providing an interface for collaborative innovation. The system 100 may display the alternative user dashboard screen 800 to the user A 120A when the user A 120A clicks on the dashboard button 412. The user A 120A may use the alternative user dashboard screen 800 to obtain a quick overview of recent changes that have occurred in the system 100. The user A 120A may also use the alternative user dashboard screen 800 to view metrics regarding their use of the system 100 and the other users 120B-N use of the system 100. The alternative user dashboard screen 800 may include an admin button 410, a home button 411, a dashboard button 412, feedback link 415, a refresh link 417, a logout link 419, a vine tab 805, and charts subsection 810. The charts subsection 810 may include an initial item table 840, a selected initial item 845, a view graph 830 and view filters 835.

In operation the user A 120A may view their activity in the charts subsection 810. The initial item table 840 may display all of the initial items in the system 100 the user A 120A has provided responses or ratings for. Alternatively or in addition the initial item table 840 may display all of the initial items in the system 100. Alternatively or in addition the initial item table 840 may display all of the ideas in the system 100. The selected initial item 845 may be an initial item the user A 120A would like to view additional information for. The view graph 830, may display detailed information regarding the selected initial item 845. The user A 120A may user the view filters 835 to select on or more metrics of view for the selected item 845. For example, the user A 120A may view a graph of the page views for the selected item 845, the page viewers for the selected item 845, and/or the page ratings for the selected item 845. The user A 120A may click on the "click here" field in the "Visit Grape" column to view the associated initial item or idea.

Fig. 9 is a screenshot of an administrator interface 900 in the system of Fig. 1, or other systems for providing an interface for collaborative innovation. The system 100 may display the administrator interface 900 to the user A 120A when the user A 120A clicks on the admin button 410. The user A 120A may use the administrator interface 900 to view and modify the administrative data associated with the system 100. A user A 120A with administrator privileges may be taken directly to the administrator interface 900 upon logging into the system 100. The administrator interface 900 may include a navigation bar 310, an admin button 410, a dashboard button 412, a report a bug button 414, a refresh button 416, a logout button 418, an administrator tabset 905, a user management section 910, a current users subsection 920, a selected user permissions subsection 930, and a add user subsection 940. The current users subsection 920 may include a search field 922, a current users table 925, a selected user 926, and a remove selected user button 928. The selected users subsection 930 may include an initial items permissions 932, a grape ideas permissions 934, admin ideas permissions 936, and a save permissions button 938. The add user subsection 940 may include a full name field 942, an email field 944, a username field 946, and a add new user button 948. The administrator interface may be designed using ADOBE FLEX ACCORDION. Each accordion may contain controls similar in nature.

In operation one of the users 120A-N with administrator privileges, such as the user A 120A, may user the administrator interface 900 to modify or view the permissions of the users 120A-N. The user A 120A may search the current users table 925 by entering a name of a user in the search field 922. The user A 120A may remove the selected user 926 by clicking on the remove selected user button 928. The user A 120A may modify the permissions associated with the selected user 926 in the selected user permissions subsection 930. The user A 120A may select or deselect one or more of the initial item permissions 932, the grape idea permissions 934, the dashboard permissions 935, the admin permissions 936, and the wine permissions 937. The initial item permissions 932 may include create, edit, and tag permissions. The grape idea permissions 934 may include create, edit, rate, and tag permissions. The admin permissions 936 may include remove/restore grape ideas, remove/restore initial items, manage users, manage flags, manage style and view feedback permissions. The dashboard permissions 935 may include view my stats and view overall stats permissions. The wine permissions 937 may include view permissions. The user A 120A may affect the changes in permissions by clicking on the save permissions button 938.

The user A 120A may add a new user using the add user subsection 940. The user A 120A may enter the name of the new user in the name field 942, the email of the new user in the email field 944 and the username of the new user in the username field 946. The user A 120A may add the new user by clicking on the add new user button 948.

Alternatively or in addition the user A 120A may use the administrator interface 900 to change the color scheme or font size of the interface. The administrator interface 900 may also be used to generate reports. The administrator interface 900 may be used to add, change or remove branding, or generally add, change or remove any features of the system 100. The administrator interface 900 may be used to manage the access mode. The access mode may be open access, domain restricted access, admin added access, or admin approved access. If the system 100 is operating in open access any person may create an account and login. If the system 100 is operating in domain restricted access, only persons with email accounts in a certain domain may create an account and login. If the system 100 is operating in admin added mode, an administrator must add a user to a user list in order to grant access. If the system 100 is operating in admin approved mode an administrator must approve of a user's request for access to the system 100.

Fig. 9A is a screenshot of an alternative administrator interface 900 in the system of Fig. 1, or other systems for providing an interface for collaborative innovation. The system 100 may display the alternative administrator interface 900 to the user A 120A when the user A 120A clicks on the admin button 410. The user A 120A may use the alternative administrator interface 900 to view and modify the administrative data associated with the system 100. A user A 120A with administrator privileges may be taken directly to the alternative administrator interface 900 upon logging into the system 100. The administrator interface 900 may include an admin button 410, a home button 411, a dashboard button 412, a feedback link 415, a feedback link 417, a logout link 419, an administrator tabset 905, a user management section 910, a current users subsection 920, a selected user permissions subsection 930, and a add user subsection 940. The current users subsection 920 may include a search field 922, a current users table 925, a selected user 926, and a remove selected user button 928. The selected users subsection 930 may include an initial items permissions 932, a grape ideas permissions 934, admin ideas permissions 936, and a save permissions button 938. The add user subsection 940 may include an add internal user button 947 and an add external user button 949. The administrator interface may be designed using ADOBE FLEX ACCORDION. Each accordion may contain controls similar in nature.

In operation one of the users 120A-N with administrator privileges, such as the user A 120A, may user the administrator interface 900 to modify or view the permissions of the users 120A-N. The user A 120A may search the current users table 925 by entering a name of a user in the search field 922. The user A 120A may remove the selected user 926 by clicking on the remove selected user button 928. The user A 120A may modify the permissions associated with the selected user 926 in the selected user permissions subsection 930. The user A 120A may select or deselect one or more of the initial item permissions 932, the grape idea permissions 934, the dashboard permissions 935, the admin permissions 936, and the wine permissions 937. The initial item permissions 932 may include create, edit, and tag permissions. The grape idea permissions 934 may include create, edit, rate, and tag permissions. The admin permissions 936 may include remove/restore grape ideas, remove/restore initial items, manage users, manage flags, manage style and view feedback permissions. The dashboard permissions 935 may include view my stats and view overall stats permissions. The wine permissions 937 may include view permissions. The user A 120A may affect the changes in permissions by clicking on the save permissions button 938.

The user A 120A may add a new user using the add user subsection 940. The user A 120A may click on the add internal user button 947 to add a new internal user and the add external user button 949 at add a new external user. An internal user may be a member of the organization or the collaborative environment while an external user may be a person external to the organization. The external users may, by default, be given more restrictive user permissions.

Alternatively or in addition the user A 120A may use the administrator interface 900 to change the color scheme or font size of the interface. The administrator interface 900 may also be used to generate reports. The administrator interface 900 may be used to add, change or remove branding, or generally add, change or remove any features of the system 100. The administrator interface 900 may be used to manage the access mode. The access mode may be open access, domain restricted access, admin added access, or admin approved access. If the system 100 is operating in open access any person may create an account and login. If the system 100 is operating in domain restricted access, only persons with email accounts in a certain domain may create an account and login. If the system 100 is operating in admin added mode, an administrator must add a user to a user list in order to grant access. If the system 100 is operating in admin approved mode an administrator must approve of a user's request for access to the system 100.

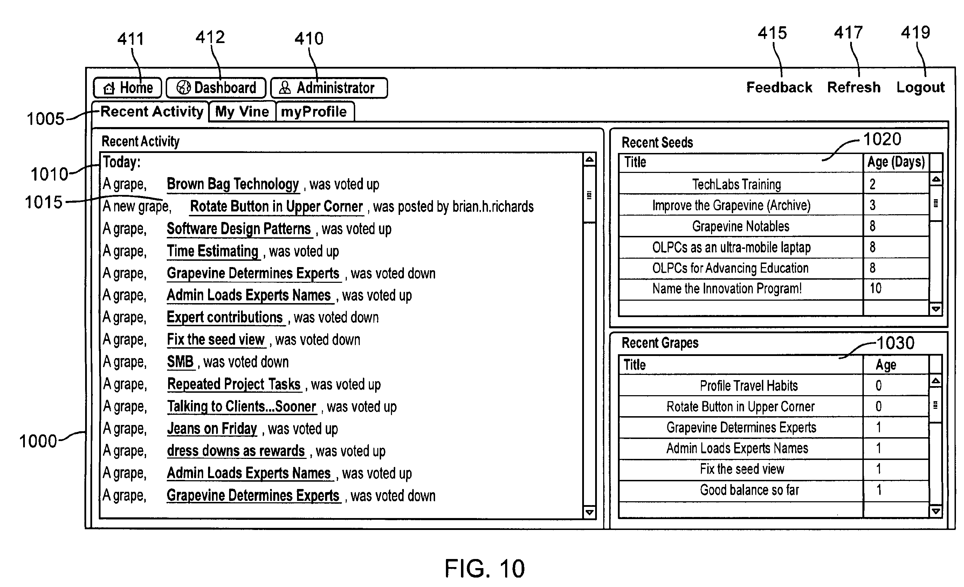

Fig. 10 is a screenshot of a recent activity screen 1000 in the system of Fig. 1, or other systems for providing an interface for collaborative innovation. The system 100 may display the recent activity screen 1000 to the user A 120A when the user A 120A clicks on the dashboard button 412 and the clicks on the recent activity tab 1005. Alternatively or in addition the system 100 may display the recent activity screen 1000 to the user A 120A when the user A 120A clicks on the dashboard button 412. The user A 120A may use the recent activity screen 1000 to view the recent activity in the system 100. The recent activity screen 1000 may include an admin button 410, a home button 411, a dashboard button 412, feedback link 415, a refresh link 417, a logout link 419, a recent activity display 1010, a recent seed table 1020 and a recent grape table 1030. The recent activity display 1010 may include a list of items or ideas.

In operation, the user A 120A may view the activity of the idea in the system in the recent activity display 1010. The recent activity display 1010 may indicate when a particular idea has received many positive ratings, or when a particular idea has received many negative ratings. The recent activity display 1010 may display the ideas, the activity on the ideas, and any associated information, such as the person who posted the idea. The user A 120A may click on one of the ideas to view the idea.

The recent seeds table 1020 may display the recent initial items added to the system 100. The user A 120A may click on one of the initial items to view the initial item. The recent seeds table 1020 may also display the age of the initial item. The recent grapes table 1030 may display the recent ideas added to the system. The recent grapes table 1030 may display the age of the ideas, such as in days. The user A 120A may click on one of the ideas to view, enhance, or rate the idea.

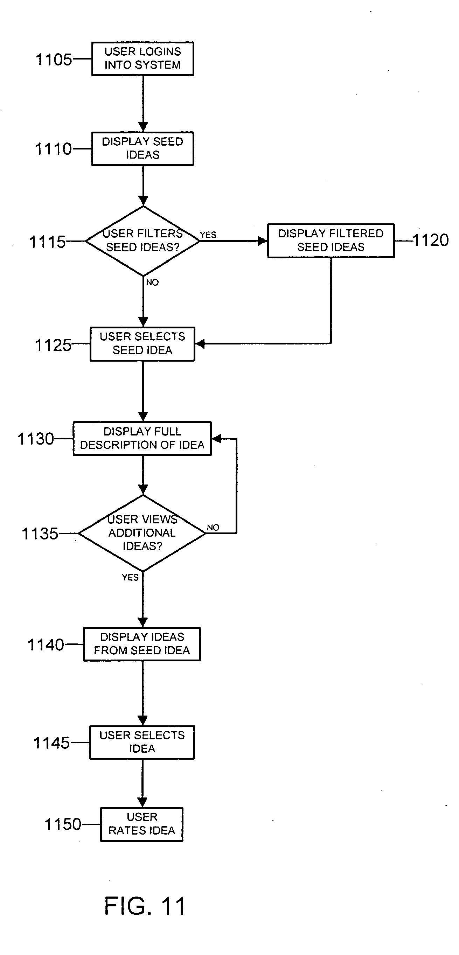

Fig. 11 is a flowchart illustrating the operations of rating an idea in the system of Fig. 1, or other systems for providing an interface for collaborative innovation. At block 1105 one of the users 120A-N, such as the user A 120A, may log into the system 100, such as by using the user login interface 300. At block 1110 the system 100 may display the existing initial items to the user A 120A, such as in the initial item selection interface 400. At block 1115 the user A 120A may use the initial item selection interface 400 to filter the one or more displayed initial items. If the user A 120A chooses to filter the initial items then the system 100 moves to block 1120. At block 1120 the system 100 displays the filtered initial items to the user A 120A.

If the user A 120A does not filter the initial items at block 1115, the system 100 moves to block 1125. At block 1125 the user A 120A may use the initial item selection interface 400 to select an initial item. At block 1130 the system 100 may display the full description of the idea selected by the user A 120A, such as through the initial item details screen 500. At block 1135 the user A 120A may view the ideas innovated from the selected initial item. If at block 1135 the user A 120A does not choose to view the ideas innovated from the selected initial item, the system 100 may return to block 1130. If at block 1135 the user A 120A chooses to view the ideas innovated from the selected initial item the system 100 may move to block 1140.

At block 1140 the system 100 may display the ideas innovated from the initial item, such as via the initial item collaborative innovation screen 600. The ideas may be displayed as a tree-like structure in the graphical collaborative display 635. Each idea on the graphical collaborative display may be represented by a node, and each node may be connected via a link to the idea it was innovated from. At block 1145 the user A 120A may select an idea in the graphical collaborative display 635 of the initial item collaborative innovation screen 600. At block 1150 the user A 120A may indicate whether they like or dislike the idea, such as by clicking on he like it button 644 or the don't like it button 646. The system 100 may store whether the user A 120A likes or dislikes the selected idea in the data store 245. The data describing whether the user A 120A likes or dislikes the idea may be used to determine the rating of the idea.

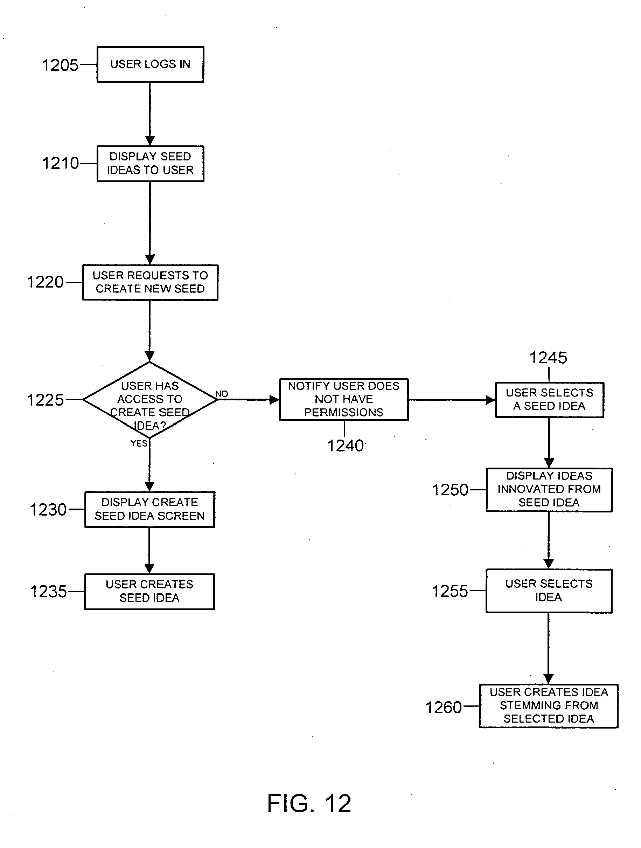

Fig. 12 is a flowchart illustrating the operations of creating an idea in the system of Fig. 1, or other systems for providing an interface for collaborative innovation. At block 1205 one of the content providers 110A-N or one of the users 120A-N, such as the user A 120A, may log into the system 100, such as via the user login interface 300. The system 100 may display the existing initial items to the user A 120A, such as via the initial item selection interface 400. At block 1220, the user A 120A may request to create a new initial item, such as via the initial item selection interface 400. At block 1225 the system 100 may determine whether the user A 120A has sufficient permissions to create a new initial item. If the system 100 determines the user A 120A has sufficient permissions to create a new initial item, the system 100 may move to block 1230. At block 1230 the user A 120A may display a create initial item interface to the user A 120A. The create initial item interface may allow the user A 120A to create one or more initial items. At block 1235 the user A 120A may use the create new initial item interface to create a new initial item.

If at block 1225 the system 100 determines that the user A 120A does not have sufficient permissions to create a new initial item the system 100 may move to block 1240. At block 1240 the system 100 may notify the user A 120A that the user A 120A does not have the necessary permissions to create an initial item. The system 100 may then display the initial item selection interface 400, where the user may create an idea innovated from an existing idea or initial item. At block 1245 the user A 120A may select an initial item, such as from the initial item selection interface 400. At block 1250 the system 100 may display ideas innovated from the selected initial item, such as via the graphical collaborative display 635 of the initial item collaborative innovation screen 600. At block 1255 the user A 120A may select an idea the initial item collaborative innovation screen 600. The selected idea may be the initial item, or any idea innovated from the initial item. At block 1260 the user A 120A may create an idea innovated from the selected idea, such as by entering the idea into the idea enhancement field 648 and clicking the enhance button 652. Alternatively or in addition, an idea innovated from another idea may also be referred to as an enhancement of the initial idea.

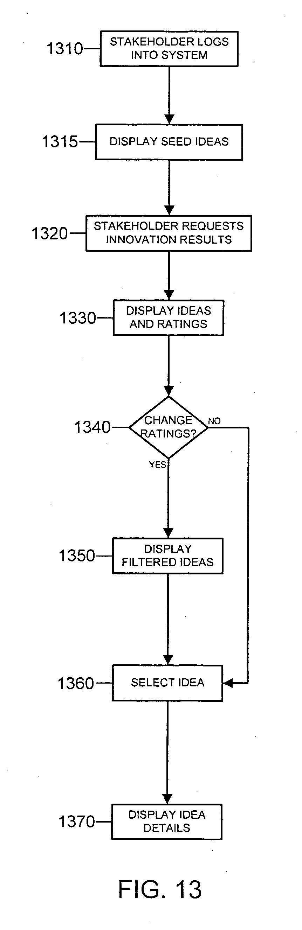

Fig. 13 is a flowchart illustrating the operations of viewing an initial item summary in the system of Fig. 1, or other systems for-providing an interface for collaborative innovation. At block 1310 one of the content providers 110A-N, such as the content provider A 110A, may log into the system 100, such as via the user login interface 300. Alternatively or in addition, one of the users 120A-N with proper permissions may log into the system 100. At block 1315 the system 100 may display the initial items to the content provider A 110A, such as via the initial item selection interface 400. At block 1320 the content provider A 110A may select an initial item and request to view the collaborative innovation results associated with the initial item.

At block 1330 the system 100 may display the results of the collaborative innovation process for the selected initial item. The results may be displayed as an ordered list of innovated ideas ordered based on the ratings received from the users 120A-N. Alternatively or in addition the ratings received from the users 120A-N may be used as one factor in an overall ratings calculation for each idea. Additional factors used in the ratings calculation may include the number of ratings the idea received, the number of views the idea received, the number of unique viewers of the idea, or generally any factor that may indicate the value of the idea. At block 1340 the content provider A 110A may change the weight applied to each factor incorporated in such a ratings calculation. If at block 1340 the content provider A 110A selects to change the weight applied to each factor in the ratings calculation, the system 100 may move to block 1250. At block 1350 the system 100 may re-calculate the rating of the ideas displayed in the results list in accordance with the weight for each factor identified by the content provider A 110A. If at block 1340 the content provider A 110A does not chose to re-weight the factors used in the rating calculation, the system 100 may move to block 1360.

At block 1360 the content provider A 110A may select an idea displayed in the results list. At block 1370 the system 100 may display the details associated with the idea to the content provider A 110A. The details may include a description of the idea, the rating of the idea, the date the idea was created, the creator of the idea, or generally any information that may be of value to the content provider A 110A.

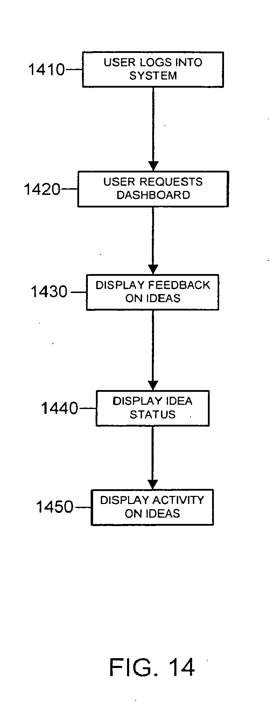

Fig. 14 is a flowchart illustrating the operations of displaying user dashboard information in the system of Fig. 1, or other systems for providing an interface for collaborative innovation. At block 1410 the user A 120A may log into the system 100, such as via the user login interface 300. At block 1420 the user A 120A may request to view the user dashboard screen 800, such as by clicking on the dashboard button 412. At block 1430 the system 100 may display the feedback on ideas given by the user A 120A, such as via the user dashboard screen 800. The feedback on ideas given by the user A 120A may be displayed in one or more graphs, such as the feedback graph 814. At block 1440 the system 100 may display the idea status of the user A 120A, such as the current ideas of the user A 120A and/or the historical ideas of the user A 120A. At block 1450 the system 100 may display the activity on the ideas of the user A 120A. The activity on the ideas of the user A 120A may be displayed as one or more graphs. The activity on the ideas of the user A 120A may include data describing the feedback given by the other users 120B-N on the ideas of the user A 120A. The user A 120A may use the data displayed by the user dashboard screen 800 to manage their interactions with the system 100.

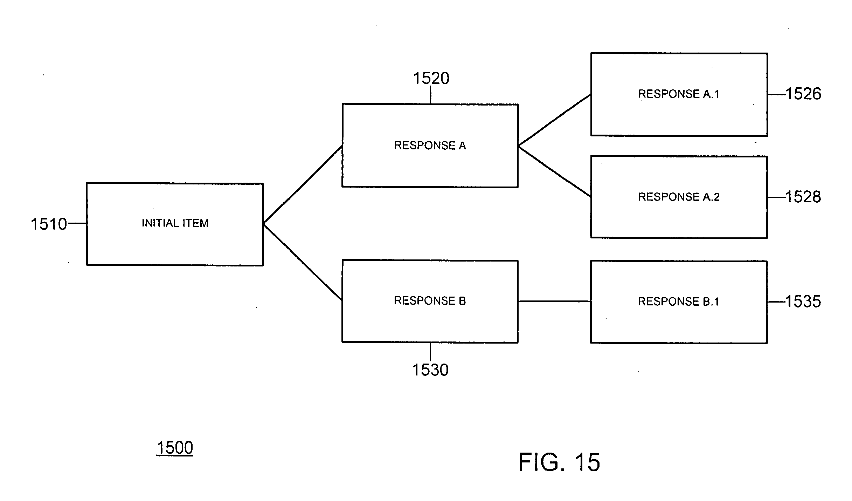

Fig. 15 is an illustration 1500 of multiple innovation paths in the system of Fig. 1, or other systems for providing an interface for collaborative innovation. The illustration 1500 includes an initial item 1510, a response A 1520, a response B 1530, a response A.1 1526, a response A.2 1528, and a response B.1 1535. The illustration 1500 may demonstrate the multiple parallel paths of innovation that may be innovated by the users 120A-N in the system 100.

In operation the content provider A 110A may provide the initial item 1510 to the users 120A-N. The user A 120A may provide the response A 1520 in response to the initial item 1510, and the user B 120B may provide the response B 1530 in response to the initial item 1510. The response A 1520 and the response B 1530 may be adverse to one another, but individually may be plausible responses to the initial item 1510. The user A 120A may provide the response B.1 1535 in response to the response B 1530 provided by the user B 120B. While the response B 1530 may be adverse to the response A 1520, the user A 120A may innovate off of the response B 1530B in the form of the response B.1 1535.

The user B 120B may provide the response A.1 1526 in response to the response A 1520, and the user N 120N may provide the response A.2 1528 in response to the response A 1520. The users 120A-N may continue to add levels of responses beyond the responses 1526, 1528, 1535 throughout the innovation period. The users 120A-N may also rate any of the responses 1520, 1530, 1526, 1528, 1535. For example, the user A 120A may rate the response B 1530 as the best response to the initial item 1510, even though it is not the last response in the innovation path. Alternatively or in addition the user B 120B may rate the response A.1 1526 as the best response to the initial item 1510. The users 120A-N may select one item as the best item, may rate the items on a scale, such as one to ten, or may rate the items as "like" or "don't like."

Once the innovation period has ended the total ratings of the responses may be determined and the responses may be ordered based on the total ratings. The ordered responses may be provided to the content provider A 110A who provided the initial item 1510. The responses with the highest ratings will be the responses at the top of the list. If the users 120A-N believed multiple responses were good responses for the item, the multiple responses may appear at the top of the ordered list with high ratings. The content provider A 110A may select one or more responses as the most valuable responses. The content provider A 110A may provide an indication of the most valuable responses to the service provider 130.

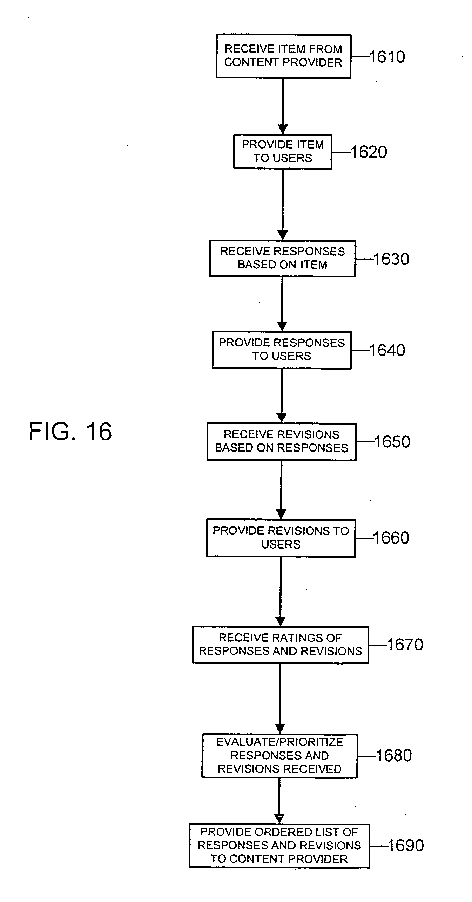

Fig. 16 is a flowchart illustrating the operations of collaborative innovation in the system of Fig. 1, or other systems for providing an interface for collaborative innovation. At block 1610 the service provider 130 may receive an item from the content provider A 110A for innovation and/or review. For example the item may be a question whose answer is of value to the content provider A 110A. Alternatively or in addition the item may be a topic of value to the content provider A 110A. The content provider A 110A may also specify an innovation period. The innovation period may be the period of time the item should be provided to the users 120A-N for innovation. At block 1620 the service provider 130 may provide the item to the users 120A-N, such as by displaying the item to the users 120A-N. At block 1630 the service provider 130 may receive responses from the users 120A-N based on the item. For example, if the item is a question, the users 120A-N may provide possible answers to the question.

At block 1640 the service provider 130 may provide the responses to the users 120A-N, such as by displaying the responses to the users 120A-N. At block 1650 the service provider 130 may receive responses, or revisions, from the users 120A-N based on the responses. The revisions to the responses may be enhancements to the responses, may provide additional detail to the responses or may clarify the responses. At block 1660 the service provider 130 may provide the revisions to the users 120A-N, such as by displaying the revisions to the users 120A-N. At block 1670 the service provider 130 may receive ratings of the responses and revisions from the users 120A-N. The ratings may indicate whether the users 120A-N believe a response or revision is accurate for the initial item. Alternatively or in addition the ratings may indicate whether the users 120A-N believe a response or revision is a valuable innovation of the initial idea.

At block 1680 the service provider 130 may evaluate and prioritize the responses and revisions received. The responses and revisions may be ordered based on the ratings received for the revisions and responses. At block 1690 the service provider 130 may provide the ordered list of responses and revisions to the content provider A 110A who provided the initial item. The ordered list of responses and revisions may allow the content provider A 110A to quickly and efficiently determine the most valuable and/or accurate responses.

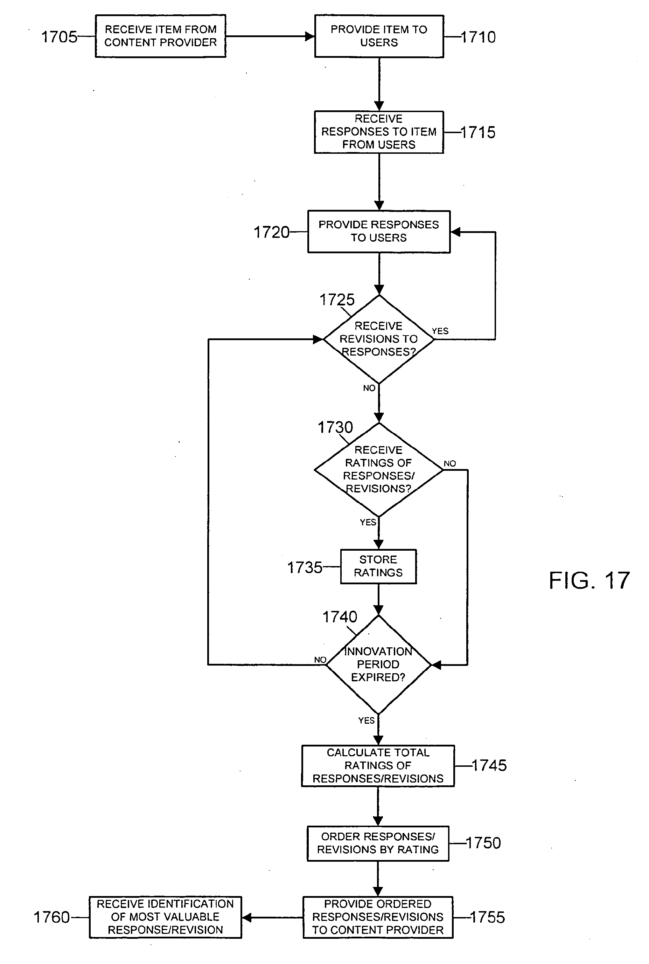

Fig. 17 is a flowchart illustrating the operations of multiple innovation iterations in the system of Fig. 1, or other systems for providing an interface for collaborative innovation. At block 1705 the service provider 130 may receive an item from the content provider A 110A for innovation and/or review. For example the item may be a question whose answer is of value to the content provider A 110A. Alternatively or in addition the item may be a topic of value to the content provider A 110A. The content provider A 110A may also specify an innovation period. The innovation period may be the period of time the item should be provided to the users 120A-N for innovation. The content provider A 110A may also identify a subset of the users 120A-N the item should be provided to, such as users 120A-N of a particular demographic.

At block 1710 the service provider 130 may provide the item to the users 120A-N, such as by displaying the item to the users 120A-N. The users 120A-N may be notified that the item is available, such as via an email notification. At block 1715 the service provider 130 may receive responses from the users 120A-N based on the item. For example, if the item is a question, the users 120A-N may provide possible answers to the question. At block 1720 the service provider 130 may provide the responses to the users 120A-N, such as by displaying the responses to the users 120A-N.

At block 1725 the system 100 may determine whether the service provider 130 received any responses, or revisions, to the responses from the users 120A-N. The revisions may be enhancements to the responses, may provide additional detail to the responses, or may clarify the responses. If at block 1725 the service provider 130 receives a response to one of the responses, the system 100 may return to block 1720 where the response is provided to the users 120A-N, such as by displaying the response to the users 120A-N. By continually providing new responses to the users 120A-N, the system 100 may cultivate multiple paths of innovation stemming from the initial item provided by the content provider A 110A.

The service provider 130 may store the responses and/or revisions received from the users 120A-N in the data store 245. The service provider 130 may store the response, the response or item the response was based on, or associated with, an association between the response and the item or response the response was based on or associated with, the user A 120A who provided the response, and the date/time the response was provided.

If at block 1725 the service provider 130 does not receive an additional response the system 100 may move to block 1730. At block 1730 the system 100 may determine whether the service provider 130 received any ratings of the responses and/or revisions. If at block 1730 the service provider 130 receives a rating the system 100 may move to block 1735. At block 1735 the service provider 130 may store the rating in the data store 245. The service provider 130 may store the response being rated, the value of the rating provided, data describing the user A 120A who provided the rating, data describing the user B 120B who provided the response that was rated, and the date/time the rating was provided.

If at block 1730 the service provider 130 does not receive any ratings of the responses and/or revisions, the system 100 may move to block 1740. At block 1740 the service provider 130 may determine whether the innovation period identified by the content provider A 110A expired. If the innovation period identified by the content provider A 110A has not expired, the system 100 may return to block 1725 and continue to wait for responses and/or ratings. If at block 1740 the innovation period has expired, the system 100 may move to block 1745.

At block 1745 the service provider 130 may calculate the total rating of each response and/or revision. The total rating of each response and/or revision may be calculated by adding the values of each rating the responses and/or revisions received. At block 1750 the system 100 may order the responses and/or revisions in accordance with the total rating the responses and/or revisions received. At block 1755 the service provider 130 may provide the ordered list of responses and/or revisions to the content provider A 110A who provided the initial item. The ordered list of responses and/or revisions may allow the content provider A 110A to quickly and efficiently determine the valuable and/or accurate responses and/or revisions. At block 1760 the service provider 130 may receive an indication of one or more most valuable responses and/or revisions from the content provider A 110A. The most valuable responses and/or revisions may be the responses and/or revisions that are provide the most accurate response to the initial item, or the responses and/or revisions that provide the best innovation of the initial item.

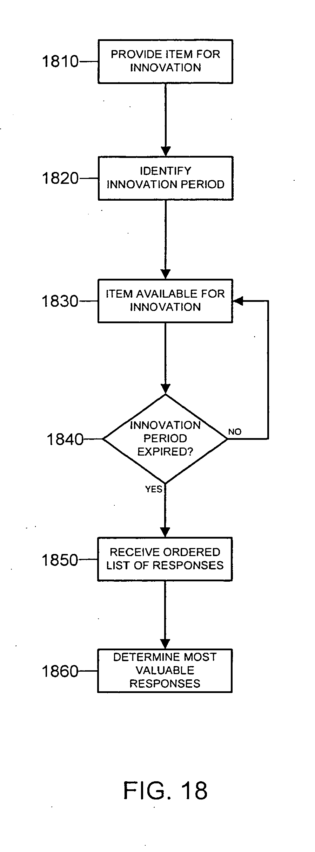

Fig. 18 is a flowchart illustrating the operations performed by a content provider of collaborative innovation in the system of Fig. 1, or other systems for providing an interface for collaborative innovation. At block 1810 the content provider A 110A may provide an item to the service provider 130 for innovation or review. The item may be a question, a statement, an idea, a news topic, an audio clip, a video clip, or generally any item that may be a catalyst for innovation. At block 1820 the content provider A 110A may specify an innovation period for the item. The innovation period may be the period of time the item should be provided to the users 120A-N for innovation. Alternatively or in addition the content provider A 110A may identify a subset of the users 120A-N the item should be provided to, such as users 120A-N of a particular demographic.

At block 1830 the item may be available to the users 120A-N for innovation. The content providers 110A-N may also participate in the innovation period by providing responses and/or ratings. At block 1840 the system 100 may determine whether the innovation period has expired. If the innovation period has not expired, the system 100 may return to block 1830 where the item is kept available for review. If at block 1840 the innovation period has expired, the system 100 may move to block 1850.

At block 1850 the content provider A 110A may receive an ordered list of the responses. The responses may be ordered based on the ratings the responses received from the users 120A-N. The ratings of the responses may represent the value the users 120A-N perceived in the responses. The content provider A 110A may be able to quickly and efficiently determine the most valuable responses by focusing their review on the responses with the highest ratings. At block 1860 the content provider A 110A may determine one or more most valuable responses. The most valuable response may be the most economically valuable, the most intellectually valuable, or generally the response most valuable to the content provider A 110A. The content provider A 110A may send an indication of the most valuable response to the service provider 130. The service provider 130 may reward the user A 120A if a response of the user A 120A is selected by one of the content providers 110A-N.

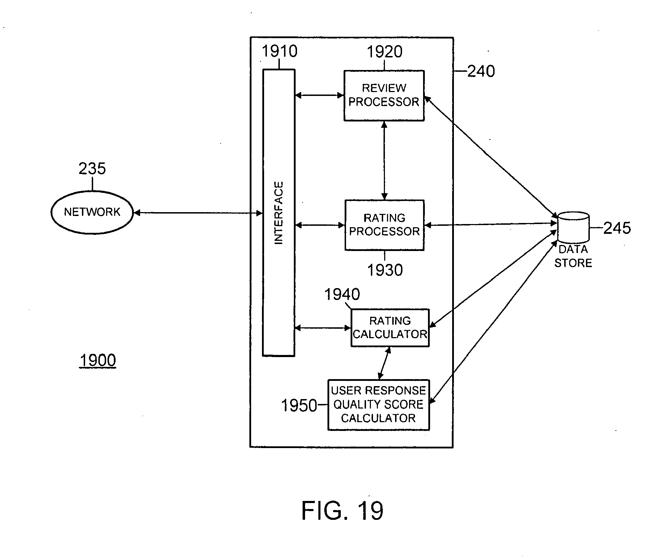

Fig. 19 provides a view of the collaborative review components in a network environment 1900 implementing the system of Fig. 1, or other systems for providing an interface for collaborative innovation. Not all of the depicted components may be required, however, and some implementations may include additional components not shown in the figure. Variations in the arrangement and type of the components may be made without departing from the spirit or scope of the claims as set forth herein. Additional, different or fewer components may be provided.

The network environment 1900 may include the network 235, the service provider server 240, and the data store 245. The server provider server 240 may include an interface 1910, a response processor 1920, a rating processor 1930, rating calculator 1940, and a user quality score calculator 1950. The interface 1910, response processor 1920, rating processor 1930, rating calculator 1940, and the user quality score calculator 1950 may be processes running on the service provider server 240, may be hardware components of the service provider server 240, or may be separate computing devices, such as the one described in Fig. 23.

The interface 1910 may communicate with the users 120A-N and the content providers 110A-N via the networks 230, 235. The response processor 1920 may process responses and initial items from the users 120A-N and the content providers 110A-N, the rating processor 1930 may process ratings received from the users 120A-N, views of responses of the users 120A-N, and selections of the content provider A 110A, the rating calculator 1940 may calculate the weighted ratings and total ratings of the responses, and the user response quality score calculator 1950 may calculate the user response quality scores of the users 120A-N.

In operation the interface 1910 may receive data from the content providers 110A-N or the users 120A-N via the network 235. For example, one of the content providers 110A-N, such as the content provider A 110A, may provide an initial item, and one of the users 120A-N, such as the user A 120A may provide a response or a rating of a response. In the case of an initial item received from the content provider A 110A, the interface 1910 may communicate the initial item to the response processor 1920. The response processor 1920 may store the initial item in the data store 245. The response processor 1920 may store data describing the content provider A 110A who provided the initial item and the date/time the initial item was provided. The response processor 1920 may also store the review period identified by the content provider A 110A for the item.

In the case of a response received from the user A 120A, the interface 1910 may communicate the response to the response processor 1920. The response processor 1920 may store the response in the data store 245 along with the initial item the response was based on. The response processor 1920 may store data describing the user A 120A who provided the response and the date/time the response was provided. In the case of a rating received from the user A 120A, the interface 1910 may communicate the rating to the rating processor 1930. The rating processor 1930 may store the rating in the data store 245 along with the response the rating was given for. The rating processor 1930 may also store data describing the user A 120A who provided the rating, data describing the user B 120B who provided the response that was rated, and the date/time the response was rated.

The rating processor 1930 may also process storing data when one of the users 120A-N views a response of the user A 120A. The interface 1910 may receive an indication that a response of the user A 120A was viewed by the user B 120B and may communicate the indication to the rating processor 1930. The rating processor 1930 may store data describing the user A 120A who provided the response, data describing the user B 120B who viewed the response, the response viewed, and the date/time the response was viewed.

The rating processor 1930 may also process storing the response selected by the content provider A 110A of the most accurate response. The interface 1910 may receive an indication of the response selected by the content provider A 110A via the interface 1910. The interface 1910 may communicate the indication of the selected response to the rating processor 1930. The rating processor 1930 may store the selected response, data describing the user A 120A who provided the selected response, data describing the content provider A 110A, and the date/time the selected response was received by the interface 1910.

The rating calculator 1940 may handle calculating the weighted ratings and the total ratings of the responses, and ordering the responses based on their total ratings. The rating calculator 1940 may retrieve each rating received for a response and may determine the user A 120A who provided the rating. The rating calculator 1940 may then request the user response quality score of the user A 120A who provided the rating from the user response quality score calculator 1950. The rating calculator 1940 may then determine the weighted rating based on the user response quality score and the value of the rating, such as by multiplying the user response quality score by the value of the rating. Once the rating calculator 1940 has determined the weighted ratings, the rating calculator 1940 may use the weighted ratings of the response to determine the total rating of the response, such as by taking the average of the weighted ratings of the response. Once the rating calculator 1940 has calculated the total rating of each response, the rating calculator 1940 may order the responses based on the ratings and may provide the ordered responses, with the total ratings, to the content provider A 110A who provided the initial item.

The service provider 130 may re-calculate a user response quality score of a user A 120A each time the underlying data the score is based on changes. Alternatively or in addition the rating calculator 1940 may request the user response quality scores of the users 120A-N when the rating calculator 1940 calculates the total rating of each response at the end of review period. The user response quality score calculator 1950 may receive a request for the user response quality score of the user A 120A. The user response quality score calculator 1950 may use one or more metrics in calculating the user response quality score. The user response quality score calculator 1950 may retrieve values from the data store 245 relating to the activity of the user A 120A in the system 100. The values may relate to the number of responses the user A 120A has provided to the system 100, the number of times a response of the user A 120A was viewed by the other users 120B-N, the average rating the responses of the user A 120A received from the users 120B-N, the number of responses of the user A 120A selected by one of the content providers 110A-N, or generally any data that may relate to the proficiency of the user A 120A in the system 100.

The user response quality score calculator 1950 may use the values to determine a user response quality score of the user A 120A. For example, the user response quality score calculator 1950 may add all of the values together to calculate the user response quality score. Alternatively or in addition different amounts of weight may be given to each of the values before the values are added together. Any of the individual values and/or the final user response quality score may be normalized. Normalizing the values may necessitate determining the average of the metric across all of the users 120A-N, and dividing the value of the user A 120A by the average value of all the users 120A-N.

For example, the user response quality score calculator 1950 may determine the number of times the user A 120A provided responses to the system 100 and may determine the average number of responses provided by each of the users 120B-N to the system 100. The number of responses provided by the user A 120A may then be divided by the average number of responses provided by the users 120B-N. If the number of responses provided by the user A 120A is higher than the average number of responses then the normalized value will be greater than 1. If the number of response provided by the user A 120A is lower than the average number of responses then the normalized value will be less than one. Normalized values may facilitate using the user response quality scores as weights.

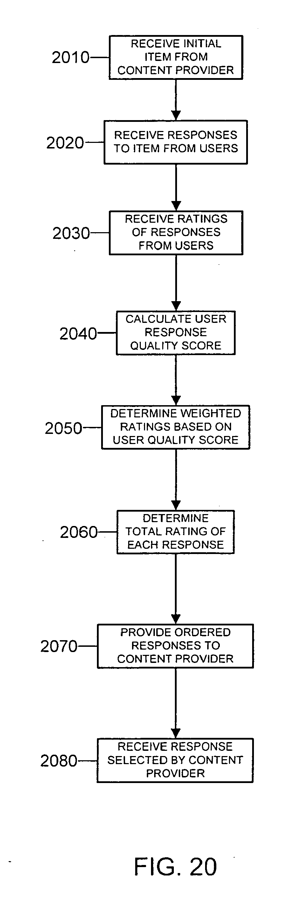

Fig. 20 is a flowchart illustrating the operations of collaborative review in the system of Fig. 1, or other systems for providing an interface for collaborative innovation. At block 2010 the service provider 130 may receive an initial item from the content provider A 110A. The content provider A 110A may provide any item which may be commented on, or responded to, such as a question, an image, an audio clip, a news article, or a video. The content provider A 110A may also provide a period of time that the item should be available for review by the users 120A-N, such as one week. Alternatively or in addition the content provider A 110A may select which of the users 120A-N should be able to review the item. The content provider A 110A may only want a subset of the users 120A-N to review the item, such as the users 120A-N who have the highest user response quality scores.

At block 2020 the service provider 130 may receive responses from the users 120A-N to the initial item. For example, if the initial item is a question the users 120A-N may respond with answers to the question. At block 2030 the system 100 may receive ratings of the responses from the users 120-N. For example, the users 120A-N may provide ratings indicating whether they believe a given response is accurate for the initial item.

At block 2040 the review period for the initial item may have ended, and the service provider 130 may calculate the user response quality scores of the users 120A-N who provided ratings. At block 2050 the service provider 130 may determine the weighted rating of each rating provided by the users 120A-N. For each rating received, the weighted rating may be calculated by multiplying the user response quality score of the user A 120A who provided the rating by the value of the rating. At block 2060 the service provider 130 may determine the total rating of each response based on the weighted ratings of each response. For example the total rating of each response may be calculated by determining the average weighted rating of each response.

At block 2070 the service provider 130 may provide the ordered list of responses to the content provider A 110A. The responses may be ordered based on the total ratings of the responses. At block 2080 the service provider 130 may receive an indication of the response selected by the content provider A 110A as the most accurate response.

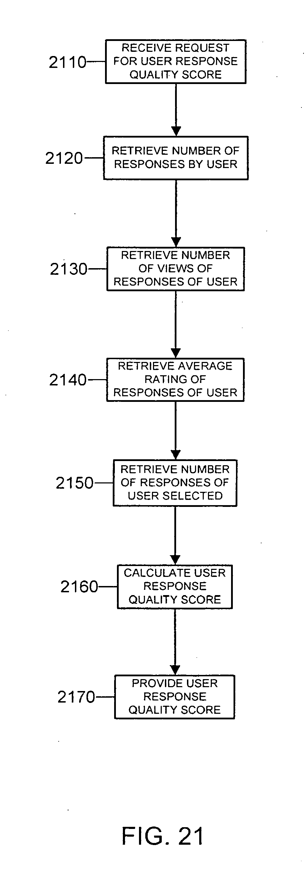

Fig. 21 is a flowchart illustrating the operations of calculating a user response quality score in the system of Fig. 1, or other systems for providing an interface for collaborative innovation. At block 2110 the user response quality score calculator 1950 may receive a request for a user response quality score, such as from the rating calculator 1940. The user response quality score may be requested during the calculation of a weighted score of a user A 120A. At block 2120 the service provider 130 may retrieve, from the data store 245, the number of responses the user A 120A provided to the system 100. At block 2130 the user response quality score calculator 1950 may retrieve, from the data store 245, the number of times the responses of the user A 120A were viewed by other users 120B-N in the system 100. At block 2140 the user response quality score calculator 1950 may retrieve, from the data store 245, the total rating of each of the responses provided by the user A 120A. The total rating of each of the responses provided by the user A 120A may be used to determine the average total rating of the responses of the user A 120A. At block 2150 the user response quality score calculator 1950 may retrieve, from the data store 245, the number of responses of the user A 120A selected by one of the content providers 110A-N.

At block 2160 the user response quality score calculator 1950 may use the retrieved data to calculate the user response quality score of the user A 120A. For example, the user response quality score calculator 1950 may determine the normalized value of each of the individual metrics. A normalized value may be determined by calculating the average value of a given metric for all of the users 120A-N, and dividing the value of the user A 120A by the average value of all the users 120A-N. The user response quality score calculator 2150 may then add the normalized values of the user A 120A to determine a sum of the normalized values. The sum of the normalized values may be the user response quality score of the user A 120A. Alternatively or in addition, the sum of the normalized values may be normalized to obtain the user response quality score. Alternatively or in addition the user response quality score calculator 1950 may add all of the individual values together and normalize the sum of the individual values. Alternatively or in addition the user response quality score calculator 1950 may weight one of the values more than the others, such as weighting the average rating of the responses of the user A 120A. Alternatively or in addition the user response quality score may be equal to one of the metrics, such as the number of responses provided by the user A 120A to the system 100.

Alternatively or in addition the user response quality score calculator 1950 may calculate a normalized value for each metric by determining the maximum value of the metric for all of the users 120A-N, and dividing the value of the user A 120A by the maximum value of all the users 120A-N. For example, the user response quality score calculator 1950 may use three metrics in determining the user response quality score value: the number of responses the user A 120A provided to the system 100, the number of times the responses of the user A 120A were viewed by the users 120A-N, and the average total rating the responses of the user A 120A received in the system 100. The user response quality score calculator 1950 may determine the maximum number of responses provided by any of the users 120A-N in the system 100, the maximum number of times responses of any of the users 120A-N were viewed by the other users 120AN in the system 100, and the maximum average total rating the responses of any of the users 120A-N received in the system 100.

The user response quality score calculator 1950 may calculate the normalized value of each of the metrics by dividing the value of the user A 120A by the maximum value in the system 100 for the metric. For example the normalized number of responses provided by the user A 120A may be calculated by dividing the number of responses provided by the user A 120A by the maximum number of responses received by any of the users 120A-N in the system 100. Once the normalized values are determined, the user response quality score calculator 1950 may multiply the nominal values by a weight. The weight may be indicative of the importance of the metric to the total rating of the response. For example, the user response quality score calculator 1950 may multiply the normalized number of responses by .16, the normalized number of views by .33, and the normalized average response total rating by .5. After multiplying the normalized values by a weight, the user response quality score calculator 1950 may add together the results to determine the user response quality score of the user A 120A. At block 2170 the user response quality score calculator 1950 may provide the user response quality score to the requestor, such as the rating calculator 1940.

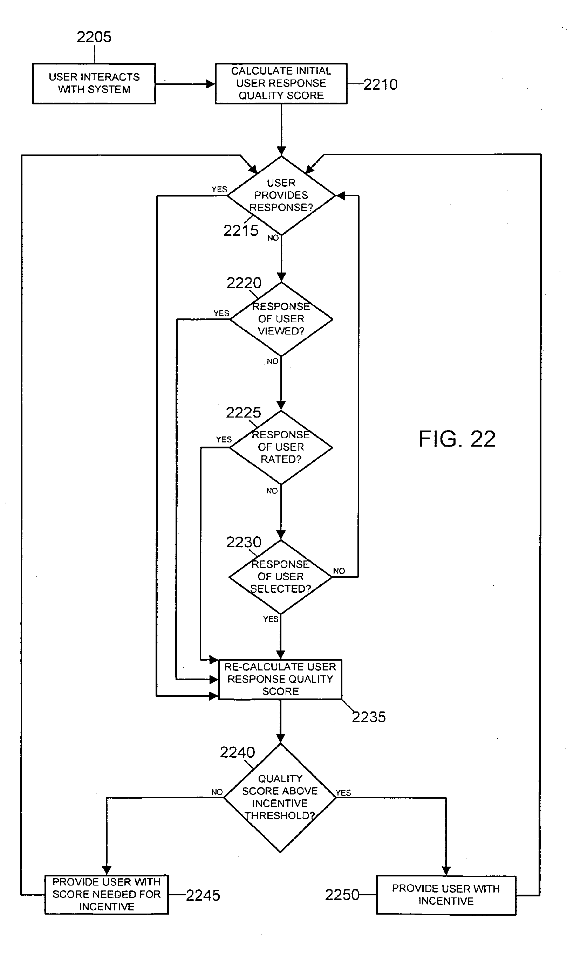

Fig. 22 is a flowchart illustrating the operations of maintaining a user response quality score in the system of Fig. 1, or other systems for providing an interface for collaborative innovation. At block 2205 one of the users 120A-N, such as the user A 120A may interact with the system 100 for the first time, such as navigating to web login page of the system 100. The user A 120A may be required to provide information to create an account with the system 100. The information may include personal information, such as name, home address, email address, telephone number, or generally any personal information, demographic information, such as age, ethnicity, gender, or generally any information that may be used in the system 100. The user A 120A may be granted immediate access to the system 100, or an administrator of the system 100 may have to approve of the user A 120A before the user A 120A is granted access to the system 100.

At block 2210 the service provider 130 may calculate an initial user response quality score of the user A 120A. The initial user response quality score may be 0, may be a default score, may be a score specified by an administrator with knowledge of the user A 120A, or may be determined based on the information the user A 120A provided to the system 100. At blocks 2215-2230, the service provider 130 may continually check for updates to the values that the user response quality score may be based on. Alternatively or in addition the user response quality score may only be calculated when a weighted rating of the user A 120A is being determined, or at the end of a review period.

At block 2215 the service provider 130 may determine whether the user A 120A provided a response to the system 100. If the user A 120A did not provide a response to the system 100, the system 100 may move to block 2220. At block 2220 the service provider 130 may determine whether a response of the user A 120A was viewed by one of the other users 120B-N. If a response of the user A 120A was not viewed by one of the other users 120B-N, the system 100 may move to block 2225. At block 2225 the service provider 130 determines whether a response of the user A 120A was rated by one of the other users 120B-N. If the response of the user A 120A was not rated by one of the other users 120B-N, the system 100 may move to block 2230. At block 2230 the service provider 130 determines whether a response of the user A 120A was selected by one of the content providers 110A-N as the most accurate response. If a response of the user A 120A was not selected by one of the content providers 110A-N, the system 100 may return to block 2215 and continue to check for updates.

If at blocks 2215-2230 the user A 120A provides a response, or a response of the user A 120A is viewed by one of the other users 120B-N, or a response of the user A 120A is rated by one of the other users 120B-N, or a response of the user A 120A is selected by one of the content providers 110A-N, the system 100 may move to block 2235. Alternatively or in addition, if any other values are used to determine the user response quality score, a change to one of those values may cause the system 100 to move to block 2235.

At block 2235 the service provider 130 may re-calculate the user response quality score of the user A 120A based on the changes in the relevant values. The operations of calculating the user response quality score are discussed in more detail in Fig. 5. At block 2240 the service provider 130 may determine whether the re-calculated user response quality score of the user A 120A is above the incentive threshold. If the user response quality score of the user A 120A is above the incentive threshold, the system 100 may move to block 2250. At block 2250 the service provider 130 may provide the user A 120A with the incentive, such as a gift certificate. The system 100 may then return to block 2215 and repeat the checking process. If at block 2240 the user response quality score is not above the incentive threshold the system 100 may move to block 2245. At block 2245 the service provider 130 may notify the user A 120A that their user response quality score has changed, but is still below the incentive threshold. The service provider 130 may provide the user A 120A with the number of points their user response quality score must be raised in order to reach the incentive threshold. The system 100 may then move to block 2215 and continue to check for updates.

Alternatively or in addition the service provider 130 may maintain multiple incentive threshold tiers, such as a bronze tier, a silver tier, and a gold tier. The users 120A-N may be rewarded with more valuable incentives when their user response quality score reaches a higher tier. For example, the gold tier may be users 120A-N with a user response quality score in the top ten percent of the users 120A-N, the silver tier may be the top twenty percent and the bronze tier may be the top thirty percent. The gold tier may have the best rewards, while the silver tier may be middle level rewards and the bronze tier may be lower level rewards.

Alternatively or in addition the service provider 130 may maintain a lower user response quality score threshold. If the user response quality score of a user A 120A falls below the lower user response quality score threshold, the user A 120A may be warned that their user response quality score is too low. Alternatively or in addition if the user response quality score of a user A 120A falls below the lower threshold the user A 120A may be removed from the system 100. Alternatively or in addition, in the case of an organization, if the user response quality score of a user A 120A falls below the lower threshold, the user A 120A may be terminated from the organization.

Fig. 23 illustrates a general computer system 2300, which may represent a service provider server 240, a third party server 250, the client applications 210A-N, 220A-N, or any of the other computing devices referenced herein. The computer system 2300 may include a set of instructions 2324 that may be executed to cause the computer system 2300 to perform any one or more of the methods or computer based functions disclosed herein. The computer system 2300 may operate as a standalone device or may be connected, e.g., using a network, to other computer systems or peripheral devices.

In a networked deployment, the computer system may operate in the capacity of a server or as a client user computer in a server-client user network environment, or as a peer computer system in a peer-to-peer (or distributed) network environment. The computer system 2300 may also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions 2324 (sequential or otherwise) that specify actions to be taken by that machine. In a particular embodiment, the computer system 2300 may be implemented using electronic devices that provide voice, video or data communication. Further, while a single computer system 2300 may be illustrated, the term "system" shall also be taken to include any collection of systems or subsystems that individually or jointly execute a set, or multiple sets, of instructions to perform one or more computer functions.

As illustrated in Fig. 23, the computer system 2300 may include a processor 2302, such as, a central processing unit (CPU), a graphics processing unit (GPU), or both. The processor 2302 may be a component in a variety of systems. For example, the processor 2302 may be part of a standard personal computer or a workstation. The processor 2302 may be one or more general processors, digital signal processors, application specific integrated circuits, field programmable gate arrays, servers, networks, digital circuits, analog circuits, combinations thereof, or other now known or later developed devices for analyzing and processing data. The processor 2302 may implement a software program, such as code generated manually (i.e., programmed).

The computer system 2300 may include a memory 2304 that can communicate via a bus 2308. The memory 2304 may be a main memory, a static memory, or a dynamic memory. The memory 2304 may include, but may not be limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one case, the memory 2304 may include a cache or random access memory for the processor 2302. Alternatively or in addition, the memory 2304 may be separate from the processor 2302, such as a cache memory of a processor, the system memory, or other memory. The memory 2304 may be an external storage device or database for storing data. Examples may include a hard drive, compact disc ("CD"), digital video disc ("DVD"), memory card, memory stick, floppy disc, universal serial bus ("USB") memory device, or any other device operative to store data. The memory 2304 may be operable to store instructions 2324 executable by the processor 2302. The functions, acts or tasks illustrated in the figures or described herein may be performed by the programmed processor 2302 executing the instructions 2324 stored in the memory 2304. The functions, acts or tasks may be independent of the particular type of instructions set, storage media, processor or processing strategy and may be performed by software, hardware, integrated circuits, firmware, micro-code and the like, operating alone or in combination. Likewise, processing strategies may include multiprocessing, multitasking, parallel processing and the like.

The computer system 2300 may further include a display 2314, such as a liquid crystal display (LCD), an organic light emitting diode (OLED), a flat panel display, a solid state display, a cathode ray tube (CRT), a projector, a printer or other now known or later developed display device for outputting determined information. The display 2314 may act as an interface for the user to see the functioning of the processor 2302, or specifically as an interface with the software stored in the memory 2304 or in the drive unit 2306.

Additionally, the computer system 2300 may include an input device 2312 configured to allow a user to interact with any of the components of system 2300. The input device 2312 may be a number pad, a keyboard, or a cursor control device, such as a mouse, or a joystick, touch screen display, remote control or any other device operative to interact with the system 2300.

The computer system 2300 may also include a disk or optical drive unit 2306. The disk drive unit 2306 may include a computer-readable medium 2322 in which one or more sets of instructions 2324, e.g. software, can be embedded. Further, the instructions 2324 may perform one or more of the methods or logic as described herein. The instructions 2324 may reside completely, or at least partially, within the memory 2304 and/or within the processor 2302 during execution by the computer system 2300. The memory 2304 and the processor 2302 also may include computer-readable media as discussed above.

The present disclosure contemplates a computer-readable medium 2322 that includes instructions 2324 or receives and executes instructions 2324 responsive to a propagated signal; so that a device connected to a network 235 may communicate voice, video, audio, images or any other data over the network 235. Further, the instructions 2324 may be transmitted or received over the network 235 via a communication interface 2318. The communication interface 2318 may be a part of the processor 2302 or may be a separate component. The communication interface 2318 may be created in software or may be a physical connection in hardware. The communication interface 2318 may be configured to connect with a network 235, external media, the display 2314, or any other components in system 2300, or combinations thereof. The connection with the network 235 may be a physical connection, such as a wired Ethernet connection or may be established wirelessly as discussed below. Likewise, the additional connections with other components of the system 2300 may be physical connections or may be established wirelessly. In the case of a service provider server 240 or the content provider servers 110A-N, the servers may communicate with users 120A-N through the communication interface 2318.

The network 235 may include wired networks, wireless networks, or combinations thereof. The wireless network may be a cellular telephone network, an 802.11, 802.16, 802.20, or WiMax network. Further, the network 235 may be a public network, such as the Internet, a private network, such as an intranet, or combinations thereof, and may utilize a variety of networking protocols now available or later developed including, but not limited to TCP/IP based networking protocols.

The computer-readable medium 2322 may be a single medium, or the computer-readable medium 2322 may be a single medium or multiple media, such as a centralized or distributed database, and/or associated caches and servers that store one or more sets of instructions. The term "computer-readable medium" may also include any medium that may be capable of storing, encoding or carrying a set of instructions for execution by a processor or that may cause a computer system to perform any one or more of the methods or operations disclosed herein.

The computer-readable medium 2322 may include a solid-state memory such as a memory card or other package that houses one or more non-volatile read-only memories. The computer-readable medium 2322 also may be a random access memory or other volatile re-writable memory. Additionally, the computer-readable medium 2322 may include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that may be a tangible storage medium. Accordingly, the disclosure may be considered to include any one or more of a computer-readable medium or a distribution medium and other equivalents and successor media, in which data or instructions may be stored.

Alternatively or in addition, dedicated hardware implementations, such as application specific integrated circuits, programmable logic arrays and other hardware devices, may be constructed to implement one or more of the methods described herein. Applications that may include the apparatus and systems of various embodiments may broadly include a variety of electronic and computer systems. One or more embodiments described herein may implement functions using two or more specific interconnected hardware modules or devices with related control and data signals that may be communicated between and through the modules, or as portions of an application-specific integrated circuit. Accordingly, the present system may encompass software, firmware, and hardware implementations.

The methods described herein may be implemented by software programs executable by a computer system. Further, implementations may include distributed processing, component/object distributed processing, and parallel processing. Alternatively or in addition, virtual computer system processing maybe constructed to implement one or more of the methods or functionality as described herein.

Although components and functions are described that may be implemented in particular embodiments with reference to particular standards and protocols, the components and functions are not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

The illustrations described herein are intended to provide a general understanding of the structure of various embodiments. The illustrations are not intended to serve as a complete description of all of the elements and features of apparatus, processors, and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

A method for collaborative innovation, the method comprising: providing a topic received from a content provider to a plurality of users; receiving a plurality of responses from the plurality of users based on the topic; providing the plurality of responses to the plurality of users; receiving a plurality of revisions to the plurality of responses from the plurality of users; providing the plurality of revisions to the plurality of users; receiving a plurality of ratings of the plurality of responses and the plurality of revisions from the plurality of users; and providing the plurality of responses and the plurality of revisions to the content provider, wherein the plurality of responses and the plurality of revisions are ordered in accordance with the plurality of ratings.

The method wherein the topic comprises a question. The method wherein at least one of the responses comprises an answer to the question. The method further comprising receiving a plurality of secondary revisions to the plurality of revisions. The method further comprising receiving a plurality of secondary ratings of the plurality of secondary revisions. The method further comprising providing the plurality of secondary revisions to the content provider, wherein the secondary revisions are ordered in accordance with the plurality of secondary ratings.

A method for collaborative innovation, the method comprising: providing an item received from a content provider to a plurality of users for review; receiving a plurality of first level responses from the plurality of users based on the item; providing the plurality of first level responses to the plurality of users for review; receiving a plurality of second level responses from the plurality of users based on the item and one of the first level responses; providing the plurality of second level responses to the plurality of users for review; receiving a plurality of ratings of the plurality of first and second level responses from the plurality of users; and providing the plurality of first and second level responses to the content provider, wherein the plurality of first and second level responses are ordered in accordance with the plurality of ratings.

The method further comprising: receiving a plurality of third level responses from the plurality of users based on the item, one of the first level responses, and one of the second level responses; providing the third level responses to the plurality of users for review; receiving a plurality of ratings of the plurality of first, second and third level responses from the plurality of users; and providing the plurality of first, second, and third level responses to the content provider wherein the plurality of first, second, and third level responses are ordered in accordance with the plurality of ratings. The method further comprising: receiving a plurality of N level responses from the plurality of users based on the item, one of the N-1 level responses, wherein N is any number; providing the N level responses to the plurality of users for review; receiving a plurality of ratings of the plurality of N level responses from the plurality of users; and providing the plurality of first to N level responses to the content provider wherein the plurality of first to N level responses are ordered in accordance with the plurality of ratings. The method wherein the plurality of ratings of a response indicates whether the plurality of users believes the response is accurate for the item.

A system for collaborative innovation, the system comprising: means for providing a topic received from a content provider to a plurality of users; means for receiving a plurality of responses from the plurality of users based on the topic; means for providing the plurality of responses to the plurality of users; means for receiving a plurality of revisions to the plurality of responses from the plurality of users; means for providing the plurality of revisions to the plurality of users; means for receiving a plurality of ratings of the plurality of responses and the plurality of revisions from the plurality of users; and means for providing the plurality of responses and the plurality of revisions to the content provider, wherein the plurality of responses and the plurality of revisions are ordered in accordance with the plurality of ratings.

The system wherein the topic comprises a question. The system wherein at least one of the responses comprises an answer to the question. The system further comprising means for receiving a plurality of secondary revisions to the plurality of revisions. The system further comprising means for receiving a plurality of secondary ratings of the plurality of secondary revisions. The system further comprising means for providing the plurality of secondary revisions to the content provider, wherein the secondary revisions are ordered in accordance with the plurality of secondary ratings.

A method for collaborative innovation, the method comprising: providing an item received from a content provider to a plurality of users for review; receiving a plurality of responses from the plurality of users based on the item; providing the plurality of responses to the plurality of users for review; receiving a plurality of ratings of the plurality of responses from the plurality of users; and providing the plurality of responses to the content provider, wherein the plurality of responses are ordered in accordance with the plurality of ratings.

A system for collaborative innovation, the system comprising: a memory to store a topic, a plurality of responses, a plurality of revisions, and a plurality of ratings; an interface operatively connected to the memory, the interface operative to communicate with a plurality of users and a content provider; and a processor operatively connected to the memory and the interface, the processor operative to receive the topic from the content provider, provide the topic to the plurality of users, receive the plurality of responses from the plurality of users based on the topic, provide the plurality of responses to the plurality of users, receive a plurality of revisions to the plurality of responses from the plurality of users, provide the plurality of revisions to the plurality of users, receive a plurality of ratings of the plurality of responses and the plurality of revisions from the plurality of users, and provide the plurality of responses and the plurality of revisions to the content provider, wherein the plurality of responses and the plurality of revisions are ordered in accordance with the plurality of ratings.

The system wherein the topic comprises a question. The system wherein at least one of the responses comprises an answer to the question. The system wherein the processor is further operative to receive a plurality of secondary revisions to the plurality of revisions. The system wherein the processor is further operative to receive a plurality of secondary ratings of the plurality of secondary revisions from the plurality of users. The system wherein the processor is further operative to provide the plurality of secondary revisions to the content provider, wherein the secondary revisions are ordered in accordance with the plurality of secondary ratings.

A method for collaborative review, the method comprising: receiving a plurality of responses from a plurality of users based on an item provided by a content provider; receiving a plurality of ratings for each response from the plurality of users; calculating a user response quality score for each user in the plurality of users; determining a weighted rating for each rating of each response based on the user response quality score of the user who provided each rating; determining a total rating for each response based on the weighted ratings of each response; and providing the responses to the content provider, wherein the responses are ordered in accordance with the total rating of each response.

The method wherein the item comprises a question. The method wherein the user response quality score for each user is based on at least one of a number of responses provided by the user, a number of times the plurality of users viewed a response of the user, and an average rating given by the plurality of users to the responses provided by the user. The method further comprising: selecting, by the content provider, at least one most accurate response in the plurality of responses; and receiving an indication from the content provider of the at least one best response. The method wherein the user response quality score of each user is based at least in part on a number of times a response provided by the user is selected by the content provider. The method wherein determining a weighted rating of each rating further comprises multiplying the rating by the user quality score of the user who provided the rating. The method wherein the total rating of each response is equal to an average of the weighted ratings of each response.

A method for determining the quality of responses of a user in a collaborative environment, the method comprising: identifying a collaborative environment wherein a user provides a plurality of responses based on a plurality of items provided by a plurality of content providers, and a plurality of users views the plurality of responses and provides a plurality of ratings for the plurality of responses; determining a quantity of the plurality of responses a user provided to the collaborative environment; determining a number of times the responses provided by the user were viewed by the plurality of users; determining an average of the plurality of ratings given by the plurality of users to the responses provided by the user; calculating a user response quality score based on at least one of the number of responses, the number of times a response was viewed and the average of the plurality of ratings; and providing the user response quality score to the user.

The method further comprising providing an incentive to the user if the user response quality score is higher than a user response quality score threshold. The method wherein the user response quality score threshold represents a user response quality score of a user providing valuable responses to the collaborative network. The method further comprising using the user response quality score to weight the plurality of ratings provided by the user. The method wherein at least one item in the plurality of items comprises a question. The method further comprising: providing the plurality of responses to a content provider in the plurality of content providers; receiving from the content provider a selection of at least one most accurate response in the plurality of responses; determining a number of times the responses provided by the user were selected by one of the content providers; and calculating the user response quality score based at least in part on the number of times the responses provided by the user were selected by one of the content providers.

A system for collaborative review, the system comprising: means for receiving a plurality of responses from a plurality of users based on an item provided by a content provider; means for receiving a plurality of ratings for each response from the plurality of users; means for calculating a user response quality score for each user in the plurality of users; means for determining a weighted rating for each rating of each response based on the user response quality score of the user who provided each rating; means for determining a total rating for each response based on the weighted ratings of each response; and means for providing the responses to the content provider, wherein the responses are ordered in accordance with the total rating of each response.

The system wherein the item comprises a question. The system wherein the user response quality score for each user is based on at least one of a number of responses provided by the user, a number of times the plurality of users viewed a response provided by the user, and an average of the plurality of ratings given by the plurality of users to the responses of the user. The system further comprising: means for selecting, by the content provider, at least most accurate response in the plurality of responses; and means for receiving an indication from the content provider of the at least one most accurate response. The system wherein the user response quality score of each user is based at least in part on a number of times a response of the user is selected by the content provider. The system wherein the total rating of each response is equal to an average of the weighted ratings of each response.

A system for collaborative review, the system comprising: a memory to store a plurality of responses, an item, a plurality of ratings, a plurality of user response quality scores, a plurality of weighted ratings, and a plurality of total ratings; an interface operatively connected to the memory, the interface operative to communicate with a plurality of users and a content provider; and a processor operatively connected to the memory and the interface, the processor operative to receive the item from the content provider via the interface, receive the plurality of responses based on the item from the plurality of users via the interface, receive the plurality of ratings for each response from the plurality of users via the interface, calculate the user response quality score for each user, determine the weighted rating for each rating of each response based on the user quality score of the user who provided each rating, determine the total rating for each response based on the weighted ratings of each response, and provide the responses to the content provider via the interface, the responses ordered in accordance with the total rating of each response.

The system wherein the processor is further operative to determine the user response quality score for each user based on at least one of a number of responses provided by the user, a number of times the plurality of users viewed a response provided by the user, and an average rating given by the plurality of users to the responses provided by the user. The system wherein the item comprises a question. The system wherein the processor is further operative to receive a selection from the content provider, via the interface, of at least one most accurate response in the plurality of responses. The system wherein the processor is further operative to determine the user response quality score of each user based at least in part on a number of times a response provided by the user is selected by the content provider. The system wherein the processor is further operative to calculate an average of the weighted ratings of each response, and set the total rating of each response equal to the average of the weighted ratings of each response.

The above disclosed subject matter is to be considered illustrative, and not restrictive, and the appended claims are intended to cover all such modifications, enhancements, and other embodiments, which fall within the true spirit and scope of the description. Thus, to the maximum extent allowed by law, the scope is to be determined by the broadest permissible interpretation of the following claims and their equivalents, and shall not be restricted or limited by the foregoing detailed description.
A system, computer-implemented method and computer program product are described for providing an interface for collaborative innovation. The system may include a memory, an interface, and a processor. The memory may store an item, primary responses, secondary responses and ratings. The interface may communicate with users and a content provider and may allow the users to create primary responses associated with the item, create secondary responses associated with the primary responses and rate the primary and secondary responses. The processor may receive the item from the content provider and provide the interface to the users. The processor may receive the primary and secondary responses from the users, and may display a graphical hierarchical representation of the item and the responses. The processor may allow the users to rate the primary and secondary responses through the graphical hierarchical representation. The processor may provide the primary and secondary responses to the content provider, ordered based on the ratings.

## Claims

1. A computer-implemented method for providing an interface for collaborative innovation, the method comprising:
receiving (1610) an item from a content provider;
providing (1620) an interface to one or more users wherein the interface allows the one or more users to create one or more primary responses associated with the item, create one or more secondary responses, each secondary response associated with one of the one or more primary responses, and rate the primary and secondary responses;
receiving (1630) the one or more primary responses associated with the initial item and the one or more secondary responses associated with the primary responses from the one or more users via the interface;
displaying (1640), via the interface, a graphical hierarchical representation of the item, the one or more primary responses, an association between the one or more primary responses and the item, the one or more secondary responses, and an association between the one or more secondary responses and the one or more primary responses;
allowing (1670) the plurality of users to rate the primary and secondary responses through the graphical hierarchical representation; and
providing (1690) the primary and secondary responses to the content provider wherein the primary and secondary response are ordered based on the ratings.

2. The method of claim 1 wherein the interface is accessible via a web browser.

3. The method of claim 1 or 2, wherein the interface comprises a rich internet application.

4. The method of any one of claims 1 to 3 wherein the item comprises a question; and
wherein at least one of the one or more primary responses preferably comprises an answer to the question.

5. The method of any one of claims 1 to 4 wherein the one or more ratings indicate whether the one or more users like the one or more primary and secondary responses.

6. A computer-implemented method for providing an interface for displaying a graphical representation of associated items, the method comprising:
providing an interface for receiving and displaying items;
receiving a first item via the interface;
receiving at plurality of second items associated with the first item via the interface; and
displaying, via the interface, a graphical representation of the first item, the plurality of second items and an association between the first item and each of the second items.

7. The method of claim 6 further comprising:
receiving a plurality of third items associated with the plurality of second items, wherein each third item is associated with at least one second item; and
displaying, via the interface, a graphical representation of the first item, the plurality of second items, the plurality of third items, the association between the first item the plurality of second items, and an association between the plurality of second items and the plurality of third items.

8. The method of claim 6 or 7, wherein the graphical representation comprises a tree-like structure.

9. The method of any one of claims 6 to 8, further comprising:
allowing a user to select one of the items in the graphical representation via the interface; and
displaying via the interface additional information related to the selected item.

10. The method of claim 9 further comprising receiving a rating of the selected item from the user via the interface.

11. The method of any one of claims 6 to 10, wherein the interface is accessible via a web browser.

12. A computer system for providing an interface for collaborative innovation, the system configured to perform operations according to the method of any one of the preceding claims.

13. A computer system for providing an interface for collaborative innovation, the system comprising:
a memory to store an item, one or more primary responses, one or more secondary responses, and one or more ratings;
an interface operatively connected to the memory, the interface operative to communicate with a content provider and one or more users, allow the one or more users to create one or more primary responses associated with the item, allow the users to create one or more secondary responses associated with the one or more of the primary responses, and allow the one or more users to provide ratings of the one or more primary and secondary responses; and
a processor operatively connected to the memory and the interface, the processor operative to receive the item from the content provider, provide the interface to the one or more users, receive the one or more primary responses associated with the item, and the one or more secondary responses associated with the primary responses from the one or more users via the interface, display, via the interface, a graphical hierarchical representation of the item, the one or more primary responses, an association between the one or more primary response and the item, the one or more secondary responses, and an association between the one or more secondary responses and the one or more primary responses, allow the plurality of users to rate the primary and secondary responses through the graphical hierarchical representation, and provide the primary and secondary response to the content provider wherein the primary and secondary responses are ordered based on the ratings.

14. The system of claim 13 wherein the system is configured to perform operations according to the method of any one of claims 2 to 5.

15. A computer program product for providing an interface for collaborative innovation, comprising somputer readable instructions which, when loaded and executed on a suitable system, perform operations according to the method of any one of the preceding claims 1 to 11.
